# FASCICULE DE BREVET EUROPEEN

(11) **EP 3 488 390 B1**
(45) Date de publication et mention de la délivrance du brevet: **09.12.2020**
(21) Numéro de dépôt: 17742259.9
(22) Date de dépôt: 21.07.2017
(51) Int. Cl.: G06K 19/073, G06K 7/10, G06K 17/00

(54) **PROCÉDÉ DE COMMUNICATION RFID SÉCURISÉE**
SICHERES RFID-KOMMUNIKATIONSVERFAHREN
SECURE RFID COMMUNICATION METHOD

(30) Priorité: 22.07.2016 FR 1657042
(43) Date de publication de la demande: 29.05.2019
(73) Titulaire: Tagsys, 13600 La Ciotat (FR)
(72) Inventeur: BELLISARD, Luc, 38180 Seyssins (FR)
(74) Mandataire: Hautier, Nicolas
(86) Numéro de dépôt international: PCT/EP2017/068441
(87) Numéro de publication internationale: WO 2018/015523

(56) Documents cités:
- EP-A1- 2 309 672
- US-A1- 2005 058 292
- US-A1- 2016 034 728

## Description

### DOMAINE TECHNIQUE DE L'INVENTION

La présente invention concerne le domaine de l'identification par radio fréquences (RFID) en général, et plus particulièrement un procédé de communication sécurisée entre un lecteur/interrogateur RFID et des transpondeurs RFID. La présente invention trouvera des applications dans de nombreux domaines comme l'inventaire de produits dans un entrepôt ou un magasin et plus particulièrement par exemple dans le domaine de la distribution, de la traçabilité et de l'authentification de produits, de préférence de luxe.

### ETAT DE LA TECHNIQUE

La technologie RFID connait depuis quelques années une croissance de son champ d'application. Anciennement connue uniquement du grand public pour son utilisation pour des systèmes antivol, elle est aujourd'hui présente dans de nombreux secteurs industriels pour des questions de traçabilité et de gestion de stocks, par exemple.

Les avancées technologiques ont permis de réduire la taille des transpondeurs RFID de sorte à ce qu'ils puissent être incorporés dans des éléments de petite taille, par exemple dans des éléments textiles ou des produits de maroquinerie au niveau d'une simple couture par exemple, mais également apposés sur des documents. Utilisée au début pour ses avantages en termes de sécurité et de traçabilité, cette technologie s'est vue confrontée au piratage informatique à des fins de contrefaçon de produits, l'objectif des malfaiteurs étant de fournir un produit contrefaisant comprenant un transpondeur RFID ayant des informations assurant de manière trompeuse l'authenticité du produit contrefaisant.

Ainsi, dans un souci toujours grandissant de sécurité, de nombreuses solutions telles que décrites dans les documents US2005/058292A1 et US2016/034728A1, visent à sécuriser l'accès aux données relatives aux transpondeurs RFID. Certaines solutions prévoient des échanges de données cryptées, d'autres des accès sécurisés afin d'accéder aux données présentes dans le transpondeur RFID.

Ces solutions ont permis de rehausser quelque peu le niveau de sécurité de l'accès aux informations comprises dans les transpondeurs RFID. Néanmoins, il existe toujours un besoin consistant à améliorer encore ce niveau de sécurité sans pour autant accroitre de façon trop significative le coût des transpondeurs RFID, ce coût devant rester bas.

La présente invention vise à résoudre au moins en partie les problématiques exposées ci-dessus.

### RESUME DE L'INVENTION

La présente invention concerne un procédé de communication sécurisée entre au moins un transpondeur RFID comprenant au moins un numéro d'identification de préférence unique et au moins un lecteur RFID, selon la revendication 1.

La présente invention permet une mise en communication sécurisée entre un lecteur RFID et un transpondeur RFID se basant sur l'échange de nombres aléatoires et sur la présence de fonctions de calcul cryptographiques au niveau du lecteur RFID comme du transpondeur RFID. Ces fonctions cryptographiques, de préférence au nombre d'au moins deux, assurent le calcul de résultats numériques sur la base de séries de nombres aléatoires permettant ainsi d'une part que le lecteur RFID soit authentifié au niveau du transpondeur RFID et d'autre part que le transpondeur RFID soit authentifié au niveau du lecteur RFID. En effet, chacun des deux interlocuteurs peut vérifier l'authenticité de l'autre par cet échange de nombres et de résultats. L'authentification d'un interlocuteur relativement à l'autre est réalisée lorsque chacun d'eux dispose des mêmes fonctions de cryptage.

Cette double vérification assure de manière simple et peu couteuse, en termes de ressources système, l'authenticité des acteurs de cette communication sécurisée. Une fois cette authentification effectuée, seul le numéro d'identification de préférence unique, appelé UID de l'anglais « Unique Permanent Identification », est envoyé depuis le transpondeur RFID vers le lecteur RFID, et c'est par exemple à partir d'une base de données auprès de laquelle le lecteur RFID peut également être authentifié que les informations relatives au transpondeur RFID sont accessibles.

Ainsi par l'envoi simple de données sans lien, autre que l'UID du transpondeur RFID, avec les acteurs de cette communication sécurisée, la présente invention permet à un lecteur RFID et à un transpondeur RFID de s'identifier l'un l'autre.

Dans le cas où un transpondeur RFID est associé à un produit, de luxe par exemple, celui-ci peut servir à la traçabilité dudit produit au travers de sa chaine de distribution afin de certifier son authenticité, voire de mettre à jour un historique du produit pour l'associer par exemple à un réseau de distribution donné. Il est alors important que toute communication avec ledit transpondeur RFID soit sécurisée afin que des tiers ne puissent intercepter les informations relatives audit produit afin de les copier par exemple dans un transpondeur RFID associé à un produit contrefaisant.

La présente invention empêche justement ce type de copie d'informations puisque si un tiers intercepte les échanges entre le lecteur RFID et le transpondeur RFID, celui-ci ne recueillera que des nombres aléatoires, des résultats de calcul sans connaissance des fonctions de cryptage, en effet aucune clef de cryptage n'est échangée entre le lecteur RFID et le transpondeur RFID.

Cette absence d'échange de clef de cryptage est un avantage relativement aux solutions proposées dans l'état de l'art. En effet, ces solutions connues reposent soit sur l'utilisation de ressources système importantes, soit sur l'échange d'informations sensibles par ondes radio. On trouve en effet de nombreuses solutions basées sur l'envoi de clefs de cryptage par ondes radio ou au travers d'un réseau de communication. Ces échanges peuvent alors être interceptés et les clefs de cryptage récupérées par un tiers par exemple. La présente invention sécurise donc la communication entre un transpondeur RFID et un lecteur RFID en ne transmettant aucune clef de cryptage.

En ce sens, la présente invention procure un niveau de sécurité bien plus élevé que les solutions qui prévoient l'échange de clefs de cryptage, et cela sans accroitre les ressources système nécessaires, voire même en les réduisant. En effet, la présente invention concerne des transpondeurs RFID généralement très éloignés du lecteur RFID, et pour des questions de coût ces transpondeurs RFID sont, de manière non limitative, de préférence passifs, c'est-à-dire que l'énergie dont ils disposent pour effectuer les opérations pour lesquelles ils sont conçus est limitée à celle qu'ils reçoivent généralement depuis le lecteur RFID ou alors depuis des dispositifs dits « répéteurs ».

La présente invention permet ainsi une communication sécurisée entre un lecteur RFID et des transpondeurs RFID éloignés dont les ressources système sont limitées et bien plus faible que dans de nombreux autres domaines d'application. On notera à ce sujet que la communication sécurisée entre des interlocuteurs proches, par technologie NFC par exemple, présente des contraintes énergétiques bien moins fortes que celles qu'imposent la communication par RFID entre un lecteur RFID et des transpondeurs RFID multiples et éloignés dudit lecteur RFID. Ainsi la présente invention rehausse d'une part la sécurité des communications entre un lecteur RFID et des transpondeurs RFID, généralement éloignés, sans accroitre les ressources système, généralement très faibles de par l'architecture même de systèmes d'inventaire RFID à titre d'exemple.

De plus la dissociation du numéro d'identification (UID) et des informations relatives au produit associé au transpondeur RFID assure également une protection desdites données. A aucun moment des données relatives au produit lui-même ne sont échangées entre le lecteur RFID et le transpondeur RFID avant la fin du procédé d'authentification voire même après authentification. En effet, selon un mode de réalisation, l'authentification de chacun de ces acteurs se fait de part et d'autre, et c'est par le biais d'un troisième acteur, une base de données par exemple, que le lecteur accède aux données relatives au produit associé audit transpondeur RFID.

La présente invention concerne entre autre un système d'inventaire et d'authentification RFID sécurisé selon la revendication 12.

Dans le cadre de la réalisation d'inventaire par un système RFID, la présente invention assure que seul les lecteurs RFID autorisés et seuls les transpondeurs RFID autorisés puissent communiquer entre eux sur la base d'une communication sécurisée par échange de données aléatoires sans échange de clefs de cryptage.

La présente invention permet ainsi de réduire la prolifération de produits contrefaisants, par exemple dans le domaine du luxe, notamment en rendant opaque les échanges entre les transpondeurs RFID et les lecteurs RFID.

De plus, la présente invention permet d'accroitre la protection des données contenues dans les transpondeurs, par exemple des données privées liées au client (numéro du client, numéro de la garantie du produit, etc...). La confidentialité des données privées du client est donc améliorée.

La présente invention concerne également un produit programme d'ordinateur sauvegardé dans au moins une mémoire non transitoire d'au moins un transpondeur RFID, selon la revendication 13.

Les ressources système dont peut disposer un transpondeur RFID sont généralement faibles afin de limiter le coût de production en masse de tels transpondeurs RFID. Dans ce contexte, la présente invention rehausse avantageusement le niveau de sécurité des communications entre un transpondeur RFID et un lecteur RFID sans accroitre ses ressources système et par là même ses besoins énergétiques.

La présente invention concerne également un transpondeur RFID selon la revendication 14.

La présente invention concerne également un produit programme d'ordinateur sauvegardé dans au moins une mémoire non transitoire en dehors d'au moins un transpondeur RFID, selon la revendication 15.

Les ressources système dont peut disposer un lecteur RFID sont potentiellement très importantes, toutefois dans un souci de coût de production et d'efficacité, la présente invention est conçue pour ne pas accroitre les ressources système dont dispose un lecteur RFID en général tout en rehaussant le niveau de sécurité des communications entre le lecteur RFID et les transpondeurs RFID.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 illustre, selon un mode de réalisation de la présente invention, les flux de communication entre un lecteur RFID 10 et un transpondeur RFID 20 associé par exemple à un produit de maroquinerie.
- La figure 2 illustre de manière détaillée, selon un mode de réalisation de la présente invention, les flux de communication entre un lecteur RFID 10 et un transpondeur RFID 20 associé par exemple à un produit de maroquinerie.
- La figure 3 illustre de manière détaillée, selon un mode de réalisation de la présente invention, les flux de communication entre un lecteur RFID 10 et au moins une passerelle de bases de données 12a comprenant au moins deux bases de données 12b et 12c au travers d'une plateforme d'authentification 13.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DETAILLEE DE L'INVENTION

Avant d'entamer une revue détaillée de modes de réalisation de l'invention, sont énoncées ci-après des caractéristiques optionnelles qui peuvent éventuellement être utilisées en association ou alternativement :
- Avantageusement, le calcul de l'au moins un résultat R2 est réalisé avant l'envoi par ledit au moins un transpondeur RFID audit au moins un lecteur RFID de l'au moins un résultat R2'.
- Avantageusement, le calcul de l'au moins un résultat R2 est réalisé après l'envoi par ledit au moins un transpondeur RFID audit au moins un lecteur RFID de l'au moins un résultat R2'.
- Avantageusement, l'envoi par ledit au moins un transpondeur RFID audit au moins un lecteur RFID de l'au moins une série de nombres aléatoires A2 est réalisé après l'envoi par ledit au moins un lecteur RFID audit au moins un transpondeur RFID de l'au moins un résultat R1
- Avantageusement, ledit au moins un résultat R1 est généré à partir au moins de ladite au moins une série de nombres aléatoires A1, de ladite au moins une série de nombres aléatoires A2 et de ladite au moins une fonction de cryptage F1, et dans lequel ledit au moins un résultat R1' est généré à partir au moins de ladite au moins une série de nombres aléatoires A1, de ladite au moins une série de nombres aléatoires A2 et de ladite au moins une fonction de cryptage F1'.

Cela permet d'augmenter la sécurité et le niveau de cryptage puisque les résultats transmis sont fonctions des deux séries de nombres aléatoires.
- Avantageusement, ledit au moins un résultat R2' est généré à partir au moins de ladite au moins une série de nombres aléatoires A1, de ladite au moins une deuxième série de nombres aléatoires A2 et de ladite au moins une fonction de cryptage F2, et dans lequel ledit au moins un résultat R2 est généré à partir au moins de ladite au moins une série de nombres aléatoires A1, de ladite au moins une série de nombres aléatoires A2 et de ladite au moins une fonction de cryptage F2'.

Cela permet d'augmenter la sécurité et le niveau de cryptage puisque les résultats transmis sont fonctions des deux séries de nombres aléatoires.
- Avantageusement, si ledit au moins un résultat R1 est égal audit au moins un résultat R1', alors celui parmi le transpondeur RFID ou le lecteur RFID ou le serveur de cryptage qui effectue la comparaison en déduit que ladite au moins une fonction de cryptage F1 est égale à ladite au moins une fonction de cryptage F1'.
- Avantageusement, si ledit au moins un résultat R2 est égal audit au moins un résultat R2', alors celui parmi le transpondeur RFID ou le lecteur RFID ou le serveur de cryptage qui effectue la comparaison en déduit que ladite au moins une fonction de cryptage F2 est égale à ladite au moins une fonction de cryptage F2'.
- Avantageusement, ledit au moins un lecteur RFID est en communication filaire et/ou non filaire avec au moins une base de données.
   Cela permet soit de disposer d'une base de données située dans le lecteur RFID lui-même pour des raisons de logistique, soit de disposer d'une base de données déportée en communication sans fil avec le lecteur RFID au travers de tous type de réseaux de préférence sécurisé.
- Avantageusement, ledit au moins un lecteur RFID envoie à ladite au moins une base de données au moins ledit numéro d'identification dudit au moins un transpondeur RFID, de préférence après réception par ledit au moins un lecteur RFID dudit au moins un numéro d'identification envoyé par ledit au moins un transpondeur RFID.
   Cela permet de vérifier l'existence dudit transpondeur RFID dans la base de données et d'obtenir les informations relatives à ce transpondeur RFID et donc au produit auquel il est associé.
- Avantageusement, ledit au moins un lecteur RFID reçoit depuis ladite au moins une base de données des données associées audit au moins un numéro d'identification de l'au moins un transpondeur RFID après identification dudit au moins un transpondeur RFID par ladite au moins une base de données à partir dudit au moins un numéro d'identification, de préférence en réponse audit envoi à ladite au moins une base de données dudit au moins un numéro d'identification dudit au moins un transpondeur RFID.
   Cela permet de retrouver aisément des informations liées au produit considéré porteur du transpondeur RFID pour des questions d'authenticité et/ou de traçabilité par exemple.
- Avantageusement, ladite au moins une base de données comprend au moins une plateforme d'authentification configurée pour autoriser ou non ledit au moins un lecteur RFID à communiquer avec ladite au moins une base de données.

Cela permet de certifier l'authenticité du lecteur RFID auprès de la base de données.
- Avantageusement, une plateforme d'authentification assure l'authenticité du lecteur RFID dans ses échanges avec le module de cryptage et/ou la base de données.

Cela permet de certifier l'authenticité du lecteur RFID auprès du module de cryptage et/ou de la base de données.
- Avantageusement, ledit au moins un lecteur RFID est en communication filaire et/ou non filaire avec au moins un module de cryptage, et ledit au moins un lecteur RFID reçoit depuis ledit au moins un module de cryptage au moins ladite série de nombres aléatoires A1.
- Avantageusement, ledit au moins un lecteur RFID comprend ladite au moins une fonction de cryptage F1 et ladite au moins une fonction de cryptage F2, et est de préférence configuré pour générer au moins ledit au moins un résultat R1 et ledit au moins un résultat R2
- Avantageusement, ledit au moins un module de cryptage comprend ladite au moins une fonction de cryptage F1 et ladite au moins une fonction de cryptage F2, et de préférence est configuré pour générer au moins ledit au moins un résultat R1 et ledit au moins un résultat R2.

Cela permet de disposer d'un module de cryptage soit disposé dans le lecteur RFID lui-même pour des raisons de logistique, soit de disposer d'un module de cryptage distant dont les échanges avec le lecteur RFID restent des échanges de nombres aléatoires et de résultats de fonctions de cryptage.
- Avantageusement, ledit au moins un module de cryptage est compris dans ladite au moins une base de données.

Cela permet de centraliser une partie de l'infrastructure de la présente invention.
- Avantageusement, ledit au moins un lecteur RFID reçoit depuis ledit au moins un module de cryptage ladite série de nombres aléatoires A1.

Cela permet de disposer d'une série de nombres aléatoires ou pseudo-aléatoires en fonction des caractéristiques du module de cryptage.
- Avantageusement, ledit au moins un lecteur RFID reçoit depuis ledit au moins un module de cryptage ledit au moins un résultat R1 généré par ledit au moins un module de cryptage, de préférence avant envoi par ledit au moins un lecteur RFID dudit au moins un résultat R1 audit au moins un transpondeur RFID.

Cela permet de disposer de ressources système dédiées aux calculs cryptographiques.
- Avantageusement, ledit au moins un lecteur RFID envoie à l'au moins un module de cryptage au moins ladite série de nombres aléatoires A2, de préférence après réception par ledit au moins un lecteur RFID d'au moins ladite série de nombres aléatoires A2 envoyée par ledit au moins un transpondeur RFID.

Cela permet de calculer le au moins un résultat R2 afin de le comparer à l'au moins un résultat R2'.
- Avantageusement, ledit au moins un lecteur RFID envoie à l'au moins un module de cryptage au moins ledit au moins un résultat R2', de préférence après réception par ledit au moins un lecteur RFID d'au moins ledit au moins un résultat R2' envoyé par ledit au moins un transpondeur RFID.
   Cela permet de comparer le au moins un résultat R2 à l'au moins un résultat R2' et d'authentifier le transpondeur RFID.
- Avantageusement, ledit au moins un lecteur RFID reçoit depuis ledit au moins un module de cryptage au moins une commande de demande du numéro d'identification de l'au moins un transpondeur RFID à condition que ledit au moins un résultat R2 est égal audit au moins un résultat R2', de préférence après envoi par ledit au moins un lecteur RFID dudit au moins un résultat R2' audit au moins un module de cryptage. Cela permet de n'interroger que des transpondeurs RFID authentifiés par la présente invention afin d'obtenir leur numéro d'identification de préférence unique.
- Avantageusement, ledit au moins un module de cryptage est configuré pour comparer au moins ledit au moins un résultat R2 avec ledit au moins un résultat R2'.
- Avantageusement, ledit au moins un module de cryptage est un serveur d'application. Cela permet de virtualiser le module de cryptage et d'utiliser une ou plusieurs sources de nombres aléatoires par exemple.
- Avantageusement, ledit au moins un transpondeur RFID est associé à un produit manufacturé disposé dans un espace commercial de vente ou un entrepôt de stockage.
- Avantageusement, ledit au moins un transpondeur RFID est associé à un produit manufacturé disposé dans un espace commercial de vente ou un entrepôt de stockage et de préférence comprenant une densité de transpondeurs RFID au moins égale à 0.05 transpondeurs par mètre carré, de préférence à au moins un transpondeur par mètre carré et avantageusement à au moins 4 transpondeurs par mètre carré.
   Cela permet d'authentifier et de certifié les produits, de luxe par exemple, et d'identifier également les produits contrefaisants.
- Avantageusement, la première série de nombres aléatoires A1 comprend au moins 8 bits, de préférence au moins 16 bits, et avantageusement au moins 32 bits.
- Avantageusement, la deuxième série de nombres aléatoires A2 comprend au moins 8 bits, de préférence au moins 16 bits, et avantageusement au moins 32 bits.
- Avantageusement, une plateforme d'authentification est positionnée au niveau des échanges entre l'au moins un lecteur RFID et l'au moins un module de cryptage et/ou l'au moins une base de données.
- Avantageusement, la plateforme d'authentification est configurée pour permettre la communication entre le lecteur RFID et le module de cryptage et/ou la base de données, si et seulement si le lecteur RFID est authentifié par la plateforme d'authentification.
- Avantageusement, la base de données peut comprendre une passerelle de bases de données entre au moins une base de données de transpondeurs RFID et une base de données de produits.
- Avantageusement, l'au moins un transpondeur RFID comprend l'au moins une fonction de cryptage F1' et l'au moins une fonction de cryptage F2'.
- Avantageusement, l'au moins un lecteur RFID comprend au moins un module de cryptage comprenant l'au moins une fonction de cryptage F1 et l'au moins une fonction de cryptage F2.
- Avantageusement, l'au moins un transpondeur RFID comprend au moins un module mémoire configuré pour enregistrer de manière non transitoire des données.
- Avantageusement, l'au moins un transpondeur RFID comprend au moins un mode de fonctionnement verrouillé et au moins un mode de fonctionnement déverrouillé.

La présente invention trouve pour domaine préférentiel d'application l'interrogation de transpondeurs RFID dans des lieux de vente ou de stockage, et en particulier dans le domaine du luxe. En effet, la présente invention s'avère particulièrement avantageuse pour répondre à des problématiques inhérentes au monde des produits manufacturés de luxe qui sont fortement victimes de la contrefaçon.

En effet, à l'heure où des systèmes RFID commencent à être mis en place pour la traçabilité et l'authentification de produits de luxe, le monde de la contrefaçon s'arme déjà afin de contrefaire les données relatives à la traçabilité et à l'authenticité des produits contrefaits.

Dans la présente description, on entend par le terme «TAG RFID», «Transpondeur RFID» ou leurs équivalents tout dispositif comportant généralement au moins une antenne et une micro-puce électronique contenant des données, et configuré pour communiquer avec un dispositif de lecture par ondes électromagnétiques afin que ledit lecteur puisse lire lesdites données contenues dans la micro-puce électronique.

Il existe de nombreux types de transpondeurs RFID, généralement regroupés en deux catégories dominantes qui sont les transpondeurs RFID dits passifs et les transpondeurs RFID dits actifs.

Le terme «TAG RFID passif», «Transpondeur RFID passif» ou leurs équivalents ont généralement pour définition tout transpondeur RFID comprenant au moins une antenne et étant alimenté par une onde électromagnétique reçue par l'antenne, pouvant également être décrit comme un transpondeur RFID télé-alimenté.

Concernant l'autre grande catégorie de transpondeurs RFID, le terme «TAG RFID actif», «Transpondeur RFID actif» ou leurs équivalents ont généralement pour définition tout transpondeur RFID étant alimenté par sa propre source d'énergie et/ou une source d'énergie locale, pouvant également être décrit comme un transpondeur RFID autoalimenté.

La présente invention a pour objectif, entre autre, de proposer une solution simple, peu couteuse et ne demandant que peu de ressources système pour assurer la communication sécurisée par ondes radio entre au moins un lecteur RFID et au moins un transpondeur RFID afin que chacun puisse s'authentifier relativement à l'autre.

Cette double authentification permet d'une part que seuls des lecteurs RFID autorisés puissent communiquer avec le transpondeur RFID et d'autre part que seuls les transpondeurs RFID autorisés puissent communiquer avec le lecteur RFID.

Il doit être rappelé que le terme «lecteur RFID», «Interrogateur RFID» ou leurs équivalents ont généralement pour définition un dispositif configuré pour communiquer par ondes électromagnétiques avec un ou plusieurs dispositifs RFID comme par exemple un ou plusieurs transpondeurs RFID.

On parlera généralement de «lecteur RFID standard», «Interrogateur RFID standard» ou des équivalents qui ont alors pour définition un lecteur RFID communiquant sur la base des protocoles de communications réglementés et standardisés (standard EPC UHF Gen2 et norme ISO 18000-6), ce type de lecteur RFID standard est trouvable aisément chez la plupart des distributeurs de lecteur RFID.

Ainsi, selon les normes EPC UHF Gen2 et norme ISO 18000-6, un «lecteur RFID standard» émet et lit des signaux dont les fréquences sont comprises entre 840MHz et 960MHz selon les zones géographiques d'utilisation du système RFID UHF. Ainsi aux USA la bande UHF attribuée aux applications UHF est comprise entre 902 et 928MHz alors qu'elle est comprise entre 866 et 868MHz en Europe. La Chine autorise les fréquences comprises entre 840 et 844MHz et le Japon les fréquences comprises entre 952MHz et 958MHz.

Selon un mode de réalisation préféré, les transpondeurs RFID, pour des raisons de sécurité, peuvent présenter deux modes de fonctionnement : l'un verrouillé et l'autre déverrouillé.

Dans le mode de fonctionnement verrouillé, les données contenues dans le transpondeur RFID sont inaccessibles au lecteur RFID.

Dans le mode de fonctionnement déverrouillé, les données contenues dans le transpondeur RFID sont accessibles au lecteur RFID, de préférence authentifié.

La permutation du mode verrouillé au mode déverrouillé peut, par exemple et de préférence, être effectuée après authentification du lecteur RFID auprès dudit transpondeur RFID.

Ainsi, concernant des sacs de luxe, par exemple, comprenant au moins un transpondeur RFID pouvant être ou non installé à demeure, la présente invention permet que seul un lecteur RFID autorisé puisse interroger ledit transpondeur RFID, et que l'utilisateur puisse authentifier ledit sac sur la base du numéro d'identification, de préférence unique appelé également UID de l'anglais « Unique Permanent Identification », dudit transpondeur RFID au travers d'une base de données de préférence elle aussi sécurisée. Typiquement, le numéro d'identification, ou UID, est enregistré dans une mémoire du transpondeur RFID.

La présente invention peut en effet être appliquée pour suivre un produit, de préférence de luxe, au travers de sa chaine de distribution et cela de manière sécurisée.

La présente invention peut également être appliquée à tous système RFID déjà existant que cela soit pour la traçabilité, la réalisation d'inventaire ou encore l'authentification de produits.

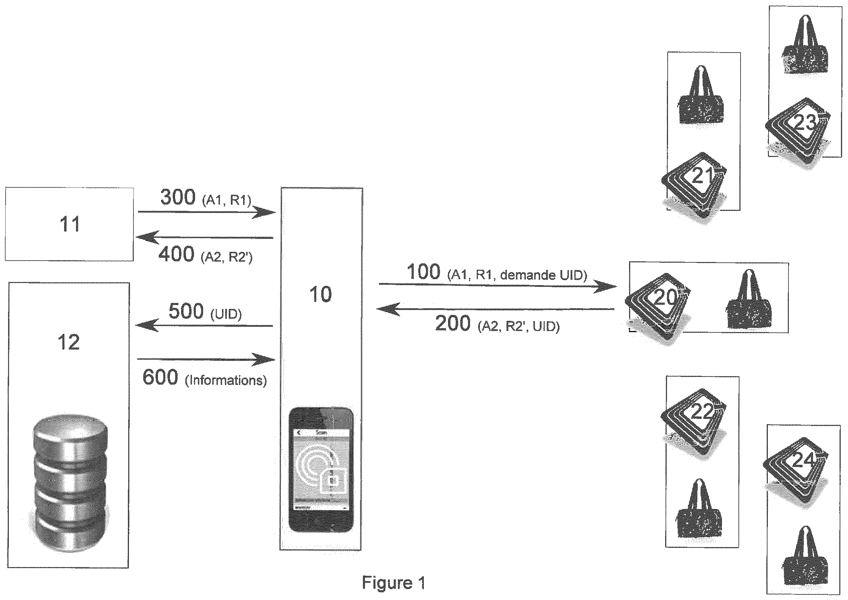

Nous allons maintenant décrire, de manière non limitative et à titre d'exemple de modes de réalisation, la présente invention sur la base des figures 1 à 3.

La figure 1 illustre, selon un mode de réalisation de la présente invention, un système comprenant au moins un lecteur RFID 10, une pluralité de transpondeurs RFID, ci-après appelés TAG 20, 21, 22, 23, 24, au moins une base de données 12 et au moins un module de cryptage 11. La figure 1 illustre l'application de la présente invention au domaine du luxe par exemple dans le cas où des produits de maroquinerie, ici des sacs, comprennent à demeure ou non les TAG 20, 21, 22, 23, 24.

De manière avantageuse, le lecteur RFID 10 peut être tout type de dispositif, de préférence portable mais pas nécessairement, apte à fonctionner comme un lecteur RFID de préférence standard. Par exemple, il peut s'agir de bornes disposées dans un entrepôt, dans un espace commercial comme une boutique, ou bien il peut également s'agir d'un dispositif de communication portable comme une tablette, un téléphone, un téléphone intelligent dit « smartphone » ou encore un lecteur RFID standard. Le lecteur RFID 10 est représenté à titre d'exemple par un smartphone dans la figure 1.

La présente invention n'a pas de limitation à l'utilisation d'une norme particulière de la RFID mais peut être appliquée à tous type de communication entre un lecteur et un transpondeur.

De même, la présente invention ne se limite pas à un seul type de TAG mais peut être appliquée à tous type de TAG apte à transmettre à un lecteur RFID au moins une série de nombres aléatoires et au moins un résultat effectué à partir de calculs de cryptage sur la base de fonctions de cryptage, de préférence de deux fonctions de cryptage. Il peut s'agir de TAG passifs et/ou actifs, par exemple.

Il est précisé que dans le cadre de la présente description, le terme «série de nombres aléatoires», «série de nombres pseudo-aléatoires» ou leurs équivalents ont généralement pour définition une série de nombres sans aucun lien déterministe entre eux générés à partir d'un phénomène aléatoire, ou d'un algorithme.

De même, le terme «fonction de cryptage», «fonction de hachage», «clef de cryptage» ou leurs équivalents trouve généralement pour définition une fonction mathématique particulière qui, à partir d'une donnée fournie en entrée, calcule une empreinte servant à identifier rapidement la donnée initiale. Ainsi, par exemple, une fonction de cryptage calcul à partir d'une série de nombres un résultat à partir duquel il est possible, en connaissant la fonction de cryptage utilisée, de retrouver ladite série de nombres.

De manière préférentielle, le TAG 20, 21, 22, 23, 24 comprend au moins deux modes de fonctionnement, l'un dit verrouillé et l'autre dit déverrouillé selon les définitions introduites précédemment.

Selon un mode de réalisation, la base de données 12 peut être intégrée au lecteur RFID 10 lui-même afin de disposer d'une grande mobilité. Ce mode de réalisation peut être opportun pour des représentants d'entreprise de produits, de luxe par exemple, se déplaçant auprès de revendeurs afin d'authentifier certains produits ou d'effectuer des études de traçabilité. Dans cette situation, disposer d'un module de cryptage 11 intégré au lecteur RFID est également un mode de réalisation de la présente invention qui peut être opportun pour des questions de logistiques et de portabilité de la présente invention. En effet, le représentant peut disposer, dans un seul et même lecteur RFID 10, le module de cryptage 11 et la base de données 12.

Selon un autre mode de réalisation, seulement la base de données 12 et/ou le module de cryptage 11 sont intégrés au lecteur RFID 10.

Avantageusement, le lecteur RFID 10 est en communication avec le module de cryptage 11 et la base de données 12 que cela soit de manière filaire ou non filaire au travers de divers types de réseaux de communication de préférence sécurisés.

Selon un mode de réalisation préféré, le module de cryptage 11 comprend des fonctions de cryptages appelées F1 et F2 ci-après, et les TAG 20, 21, 22, 23, 24 comprennent tous les mêmes fonctions de cryptages appelées F1' et F2' ci-après.

Pour que le lecteur RFID 10 et les TAG 20, 21, 22, 23, 24 puissent s'authentifier entre eux, il convient alors que F1 soit égale à F1' et que F2 soit égale à F2', c'est-à-dire que les fonctions F1 et F1' soient identiques et que les fonctions F2 et F2' également.

De préférence, ces fonctions de cryptages F1' et F2' sont implémentées dans les TAG 20, 21, 22, 23, 24 leur mise en fonction par exemple.

Les fonctions de cryptages F1 et F2 sont implémentées dans le module de cryptage 11 lors de sa mise en fonction par exemple.

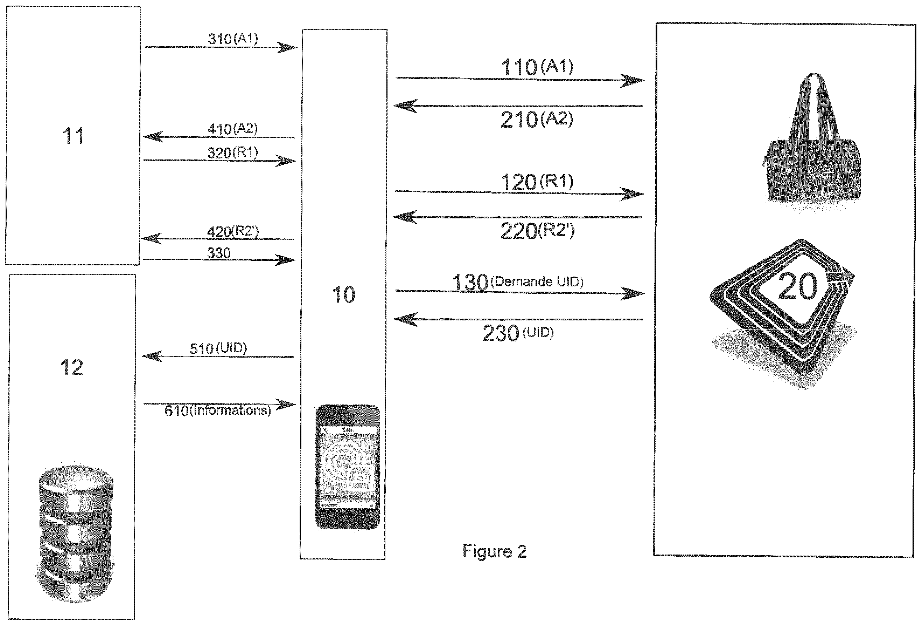

Nous allons maintenant décrire, selon un mode de réalisation de la présente invention illustré par la figure 2, la récupération par le lecteur RFID 10 du numéro d'identification, de préférence unique et ci-après appelé UID, du TAG 20 et des informations du produit associé au TAG 20.

Selon un mode de réalisation, le TAG 20 est dans son mode de fonctionnement verrouillé et le lecteur RFID 10 reçoit 310 depuis le module de cryptage 11 au moins une première série de nombres aléatoires A1 qu'il transmet 110 ensuite au TAG 20.

De préférence, le TAG 20 enregistre alors, dans un module mémoire par exemple, la première série de nombres aléatoires A1 et transmet 210 au lecteur RFID 10 au moins une deuxième série de nombres aléatoires A2. La mémoire qui sauvegarde la ou les séries de nombres aléatoires peut être la même que celle qui sauvegarde le numéro d'identification du transpondeur RFID.

Cette deuxième série de nombres aléatoires A2 est générée par le TAG 20. Cette génération peut être fonction des ressources système du TAG 20 et/ou être basée sur des listes de séries de nombres aléatoires, des listes de nombres aléatoires, un ou plusieurs algorithmes de génération de nombres pseudo-aléatoires ou des phénomènes aléatoires.

Ensuite, le lecteur RFID 10 envoie 410 la deuxième série de nombres aléatoires A2 au module de cryptage 11. Le module de cryptage 11 effectue alors de préférence deux calculs de préférence cryptographiques : un calcul d'un résultat R1 à partir d'une première fonction de cryptage F1 et d'au moins la première série de nombres aléatoires A1, et de préférence à partir de la première série de nombres aléatoires A1 et de la deuxième série de nombre aléatoires A2, et un calcul d'un résultat R2 à partir d'une deuxième fonction de cryptage F2 et d'au moins la deuxième série de nombres aléatoires A2, et de préférence à partir de la première série de nombres aléatoires A1 et de la deuxième série de nombre aléatoires A2. A titre d'alternative, le calcul de R2 peut être effectué ultérieurement, lorsque la présente invention nécessite ce résultat, c'est-à-dire par exemple après la réception du résultat R2' par le lecteur RFID 10 envoyé par le TAG 20 comme décrit ci-après, et cela afin de limiter les ressources système.

De préférence, le résultat R1 est une fonction F1 des séries de nombres aléatoires A1 et A2 noté: R1 = F1(A1, A2), et le résultat R2 est une fonction F2 des séries de nombres aléatoires A1 et A2 noté : R2 = F2(A1, A2).

Avantageusement, la fonction de cryptage F1 est enregistrée dans une mémoire non transitoire en dehors du TAG 20, de sorte que le TAG 20 n'a pas accès à cette mémoire. Il en est préférentiellement de même pour la fonction de cryptage F2.

Le lecteur RFID 10 reçoit 320 depuis le module de cryptage 11 le premier résultat R1 qu'il transmet 120 au TAG 20.

Le TAG 20 effectue alors un calcul de cryptage sur la base de la première fonction de cryptage F1' et de la première série de nombres aléatoires A1, et de préférence de la première série de nombres aléatoires A1 et de la deuxième série de nombres aléatoires A2, afin de généré un résultat R1'.

De préférence, le résultat R1' est une fonction F1 des séries de nombres aléatoires A1 et A2 noté : R1' = F1' (A1, A2).

Avantageusement, la fonction de cryptage F1' est enregistrée dans une mémoire non transitoire en dehors du lecteur RFID 10 et/ou du module de cryptage 11. Il en est préférentiellement de même pour la fonction de cryptage F2'.

Le TAG 20 effectue alors une comparaison entre le résultat R1 reçu depuis le lecteur RFID 10 et le résultat R1'. Si le lecteur RFID 10 et le TAG 20 sont authentiques, alors la fonction de cryptage F1 est identique à la fonction de cryptage F1', et donc le module de cryptage 11 et le TAG 20 comprennent les mêmes fonctions de cryptage, de ce fait, les résultats R1 et R1' sont égaux. Cette étape de comparaison assure l'authentification du lecteur RFID 10 auprès du TAG 20.

Dans le cas où R1' est égal à R1, alors le TAG 20 permute depuis son mode de fonctionnement verrouillé vers son mode de fonctionnement déverrouillé pour permettre au lecteur RFID 10 authentifié d'accéder à ses données. Dans le cas contraire le TAG 20 reste dans son mode de fonctionnement verrouillé empêchant ainsi l'accès à ses données au lecteur RFID 10, celui-ci n'ayant pas été authentifié.

De plus, et selon un mode de réalisation préféré, dans le cas où R1' est égal à R1, le TAG 20 effectue un calcul de cryptage sur la base de la deuxième fonction de cryptage F2' et de la deuxième série de nombres aléatoires A2, et de préférence de la première série de nombres aléatoires A1 et de la deuxième série de nombres aléatoires A2, afin de généré un résultat R2'. Cela permet d'effectuer le calcul de R2' uniquement si le lecteur RFID 10 a été préalablement authentifié par le TAG 20.

Avantageusement, le résultat R2' est une fonction F2' des séries de nombres aléatoires A1 et A2 noté : R2' = F2' (A1, A2).

Le TAG 20 envoie 220 le résultat R2' au lecteur RFID 10.

De préférence, la permutation du mode de fonction verrouillé vers le mode de fonctionnement déverrouillé du TAG 20 peut être réalisée avant ou après l'envoi par le TAG 20 au lecteur RFID 10 du résultat R2'.

Après réception du résultat R2', le lecteur RFID 10 transmet 420 le résultat R2' au module de cryptage 11 afin que celui-ci effectue une comparaison entre le résultat R2 et le résultat R2'. Ces deux résultats doivent être égaux si le TAG 20 est authentique. Cette étape permet alors l'authentification du TAG 20 auprès du lecteur RFID 10. Si les deux résultats R2 et R2' sont égaux, alors le module de cryptage 11 le notifie 330 au lecteur RFID 10 en lui envoyant, de préférence, une commande de demande de l'UID du TAG 20.

Le lecteur RFID 10 envoie 130 une demande au TAG 20 de son UID. Le TAG 20 étant alors dans son mode de fonctionnement déverrouillé, il transmet 230 au lecteur RFID 10 son UID.

Avantageusement, le lecteur RFID 10 transmet 510 ledit UID reçu depuis le TAG 20 à la base de données 12 afin de vérifier existence du TAG 20 dans celle-ci et d'obtenir les données relatives au produit associé au TAG 20.

Cette base de données 12 sauvegarde en effet les données assignées à l'UID du TAG 20, ce dernier servant ainsi de code par exemple pour accéder aux données.

La base de données 12 transmet 610 les données relatives au produit associé au TAG 20 au lecteur RFID 10.

Selon un mode de réalisation, le lecteur RFID 10 comprend un dispositif d'affichage afin de visualiser lesdites données liées audit produit.

Ainsi, par exemple, l'employer d'une boutique de luxe peut utiliser son lecteur RFID, par exemple un téléphone intelligent de type « smartphone », afin d'établir une communication sécurisée avec le transpondeurs RFID d'un sac en particulier pour déterminer son authenticité ou simplement pour obtenir des informations relatives au sac telles que composition, origine, circuit de distribution, etc...

Afin de résumer ici le procédé de communication sécurisée entre le TAG 20 et le lecteur RFID 10, nous allons présenter les différentes étapes effectuées selon la description de la figure 2 illustrant un mode de réalisation possible de la présente invention.

La présente invention peut par exemple non limitatif comprendre au moins les étapes suivantes :
∘ 310 : Envoi depuis le module de cryptage 11 vers le lecteur RFID 10 d'au moins une première série de nombre aléatoires A1 ;
∘ 110 : Envoi depuis le lecteur RFID 10 vers le TAG 20 de la première série de nombre aléatoires A1 ;
∘ De préférence, enregistrement de la première série de nombres aléatoires A1 dans un module mémoire du TAG 20 ;
∘ 210 : Envoi depuis le TAG 20 vers le lecteur RFID 10 d'au moins une deuxième série de nombre aléatoires A2 ;
∘ 410 : Envoi depuis le lecteur RFID 10 vers le module de cryptage 11 de la deuxième série de nombres aléatoires A2 ;
∘ Calcul d'au moins un premier résultat R1 sur la base de la fonction de cryptage F1 et de la première série de nombres aléatoires A1 et de la deuxième série de nombres aléatoires A2.
∘ Calcul d'au moins un quatrième résultat R2 sur la base de la fonction de cryptage F2 et de la première série de nombres aléatoires A1 et de la deuxième série de nombres aléatoires A2.
∘ 320 : Envoi depuis le module de cryptage 11 vers le lecteur RFID 10 du premier résultat R1 ;
∘ 120 : Envoi depuis le lecteur RFID 10 vers le TAG 20 du premier résultat R1 ;
∘ Calcul d'au moins un deuxième résultat R1' sur la base de la fonction de cryptage F1' et de la première série de nombres aléatoires A1 et de la deuxième série de nombres aléatoires A2.
∘ Si R1' est égal à R1 alors le TAG 20 permute son mode de fonctionnement depuis le mode verrouillé vers le mode déverrouillé, et le TAG 20 effectue le calcul d'au moins un troisième résultat R2' sur la base de la fonction de cryptage F2' et de la première série de nombres aléatoires A1 et de la deuxième série de nombres aléatoires A2.
∘ 220 : Envoi depuis le TAG 20 vers le lecteur RFID 10 du troisième résultat R2' ;
∘ 420 : Envoi depuis le lecteur RFID 10 vers le module de cryptage 11 du troisième résultat R2' ;
∘ Si R2' est égal à R2 : 330 : Envoi depuis le module de cryptage 11 vers le lecteur RFID 10 d'au moins une commande de demande du numéro d'identification de préférence unique du TAG 20 ;
∘ 130 : Envoi depuis le lecteur RFID 10 vers le TAG 20 d'au moins une demande de numéro d'identification ;
∘ 230 : Envoi depuis le TAG 20 vers le lecteur RFID 10 de son numéro d'identification ;
∘ 510 : Envoi depuis le lecteur RFID 10 vers la base de données 12 du numéro d'identification ;
∘ 610 : Envoi depuis la base de données 12 vers le lecteur RFID 10 d'au moins une donnée relative au produit associé au TAG 20.

Ainsi la présente invention assure l'établissement d'une communication sécurisée entre le lecteur RFID 10 et le TAG 20 sans échanger de clef de cryptage ou de données sensibles. De ce fait une personne malfaisante étant à l'écoute des échanges entre le lecteur RFID 10 et le TAG 20 ne pourrait pas récupérer de données d'identification ou d'authentification pour communiquer avec le TAG 20.

La présente invention permet donc de limiter voir même d'empêcher toute contrefaçon des transpondeurs RFID associés à des produits et donc le faux-semblant d'authenticité de produits contrefaisants.

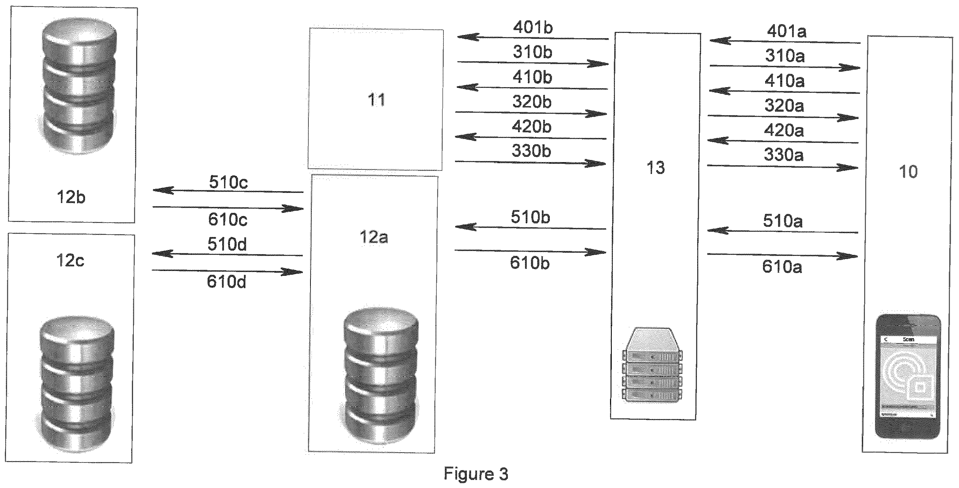

Nous allons maintenant décrire, sur la base de la figure 3, un mode de réalisation dans lequel la base de donnée 12 comprend au moins une passerelle de bases de données 12a, au moins une première base de données de transpondeurs RFID 12b et au moins une base de données de produits 12c associés aux transpondeurs RFID.

La passerelle de bases de données 12a assure la liaison entre le lecteur RFID 10, la base de données de transpondeurs RFID 12b et la base de données de produits 12c.

La base de données de transpondeurs RFID 12b comprend par exemple tous les numéros d'identification, c'est-à-dire les UID par exemple, de tous les transpondeurs RFID authentiques, c'est-à-dire non contrefaits par exemple.

La base de données de produits 12c comprend par exemple les informations relatives aux produits associés aux transpondeurs RFID en utilisant le numéro d'identification comme lien entre les informations du produit et le transpondeur RFID associé au produit. Ces informations peuvent se rapporter à des questions de traçabilité, de certification, de composition, de propriétaire, etc...

La passerelle de bases de données 12a permet ainsi de confirmer l'existence d'un TAG dans la base de données de transpondeurs RFID 12b avant de faire une recherche dans la base de données de produits 12c.

Cela permet ainsi une économie de ressource système en séparant l'étape de recherche d'existence du TAG dans la base de données de transpondeurs RFID 12b et l'étape de recherche d'informations dans la base de données de produits 12c.

Cela permet aussi, dans le cas où une pluralité de bases de données de produits fait partie du système de la présente invention, d'aiguiller une requête d'information vers la bonne base de données.

Avantageusement, afin d'accroitre la sécurité entre le lecteur RFID 10 et le module de cryptage 11 et/ou la base de données 12, il est possible de disposer une plateforme d'authentification 13 au niveau des échanges entre le lecteur RFID 10 et le module de cryptage 11 et/ou la base de données 12.

La figure 3 illustre, selon un mode de réalisation de la présente invention, un système comprenant une plateforme d'authentification 13 positionnée d'un point de vue des échanges de communication entre le lecteur RFID 10 et le module de cryptage 11 et une passerelle de bases de données 12a permettant l'accès à une base de données de TAG 12b et à une base de données de produits 12c. La figure 3 ne représente que la partie de la présente invention concernant la communication entre le lecteur RFID 10 et la plateforme d'authentification 13, les échanges avec le TAG 20 étant inchangés dans ce mode de réalisation par rapport à la description de la figure 2 précédente.

Dans ce mode de réalisation toutes les communications depuis et vers le lecteur RFID 10 et le module de cryptage 11 et les éléments 12a, 12b et 12c de la base de données 12 passent par la plateforme d'authentification 13 afin que le lecteur RFID 10 soit authentifié à chaque échange lors de communications entre ces divers éléments de la présente invention.

Ainsi, une première étape de la présente invention, selon ce mode de réalisation, concerne l'authentification du lecteur RFID 10 auprès de la passerelle d'authentification 13 par l'envoi 401a d'une demande d'authentification. Cette demande, si elle est acceptée, c'est-à-dire si le lecteur RFID 10 est authentifié par la passerelle d'authentification 13, entraine, selon un mode de réalisation, la création d'une session de communication entre le lecteur RFID 10, disposant désormais d'un identifiant auprès de la plateforme d'authentification 13, et ladite plateforme d'authentification 13.

Cette demande d'authentification étant acceptée, elle permet avantageusement une demande 401b d'une première série de nombres aléatoires A1 auprès du module de cryptage 11.

Nous précisons encore que les étapes concernant les communications entre le lecteur RFID 10 et le TAG 20 restent inchangées par rapport à la description précédente de la figure 2. De même les étapes de calculs cryptographiques et de comparaison de résultats restent inchangées relativement à la description précédente de la figure 2.

Les modes de réalisations des figures 2 et 3 sont parfaitement compatibles entre. La figure 3 peut être comprise comme une description plus détaillée et plus précise du mode de réalisation de la figure 2.

Ainsi de manière identique à la description de la figure 2, nous pouvons résumer la description de ce mode de réalisation illustré par la figure 3 au travers des étapes suivantes :
- 401a : Envoi depuis le lecteur RFID 10 vers la plateforme d'authentification 13 d'au moins une demande d'authentification ;
- Si la demande d'authentification est acceptée par la plateforme d'authentification 13 : ouverture d'une session de communication avec le lecteur RFID 10 et la plateforme d'authentification 13 comprenant l'attribution d'un identifiant de préférence unique au lecteur RFID 10 ;
- 401b : Envoi depuis la plateforme d'authentification 13 vers le module de cryptage 11 d'au moins une demande d'au moins une première série de nombres aléatoires A1 ;
- 310b : Envoi depuis le module de cryptage 11 vers la plateforme d'authentification 13 d'au moins une première série de nombre aléatoires A1 ;
- 310a : Envoi depuis la plateforme d'authentification 13 vers le lecteur RFID 10 d'au moins une première série de nombre aléatoires A1 ;
- 410a : Envoi depuis le lecteur RFID 10 vers la plateforme d'authentification 13 d'au moins une deuxième série de nombres aléatoires A2 reçue depuis le TAG 20 ;
- 410b : Envoi depuis la plateforme d'authentification 13 vers le module de cryptage 11 d'au moins une deuxième série de nombres aléatoires A2 ;
- 320b : Envoi depuis le module de cryptage 11 vers la plateforme d'authentification 13 d'au moins un premier résultat R1 ;
- 320a : Envoi depuis la plateforme d'authentification 13 vers le lecteur RFID 10 d'au moins un premier résultat R1 ;
- 420a : Envoi depuis le lecteur RFID 10 vers la plateforme d'authentification 13 d'au moins un troisième résultat R2' reçu depuis le TAG 20 ;
- 420b : Envoi depuis la plateforme d'authentification 13 vers le module de cryptage 11 d'au moins un troisième résultat R2' ;
- 330b : Envoi depuis le module de cryptage 11 vers la plateforme d'authentification 13 d'au moins une commande de demande du numéro d'identification du TAG 20 ;
- 330a : Envoi depuis la plateforme d'authentification 13 vers le lecteur RFID 10 d'au moins une commande de demande du numéro d'identification du TAG 20 ;
- 510a : Envoi depuis le lecteur RFID 10 vers la plateforme d'authentification 13 d'au moins un numéro d'identification ;
- 510b : Envoi depuis la plateforme d'authentification 13 vers la passerelle de bases de données 12a d'au moins un numéro d'identification ;
- 510c : Envoi depuis la passerelle de bases de données 12a vers la base de données de transpondeurs RFID 12b d'au moins un numéro d'identification ;
- 610c : Envoi depuis la base de données de transpondeurs RFID 12b vers la passerelle de bases de données 12a d'au moins une information d'existence du TAG 20 ;
- 510d : Envoi depuis la passerelle de bases de données 12a vers la base de données de produits 12c d'au moins un numéro d'identification ;
- 610d : Envoi depuis la base de données de produits 12c vers la passerelle de bases de données 12a d'au moins une information concernant ledit produit ;
- 610b : Envoi depuis la base de données vers la plateforme d'authentification d'au moins une donnée relative à un produit ;
- 610a : Envoi depuis la plateforme d'authentification vers le lecteur RFID d'au moins une donnée relative à un produit ;

Selon un mode de réalisation préféré, la présente invention comprend au moins trois niveaux d'identification différents servant à garantir la sécurité de la communication :
- Le premier niveau concerne l'authentification du lecteur RFID 10 auprès de la plateforme d'identification 13 permettant sa mise en communication avec à la fois le module de cryptage 11 mais également la base de données 12 comprenant ici à titre d'exemple non limitatif une passerelle de bases de données 12a, une base de données de transpondeurs RFID 12b et une base de données de produits 12c.
- Le second niveau d'authentification concerne l'authentification du lecteur RFID 10 auprès du transpondeur RFID 20 permettant au transpondeur RFID 20 de permuter de son mode de fonctionnement verrouillé vers son mode de fonctionnement déverrouillé.
- Le troisième niveau d'authentification concerne l'authentification du transpondeur RFID 20 auprès du module de cryptage 11 permettant ainsi l'envoi d'une demande de son numéro d'identification par le lecteur RFID 10.
- De manière optionnelle mais avantageuse, la présente invention présente un quatrième niveau de d'authentification dans le fait d'utiliser la base de données de transpondeurs RFID 12b afin de confirmer l'existence du transpondeur RFID 20 authentifié avant d'accéder à la base de données de produits 12c.

L'utilisation de ces différents niveaux de sécurité assure d'une part que seuls des transpondeurs RFID authentifiés et appartenant à la base de données de transpondeurs RFID peuvent être utilisés pour accéder au contenu de la base de données de produits, et d'autre part que seuls les lecteurs RFID authentifiés peuvent communiquer avec le module de cryptage, la base de données de produits et avec le transpondeur RFID authentifié.

La présente invention concerne donc un procédé d'établissement d'une communication sécurisée entre un lecteur RFID et un transpondeur RFID par le simple échange de données aléatoires sans aucun lien avec une donnée réelle propre au lecteur RFID ou au transpondeur RFID.

La présente invention convient particulièrement au secteur des produits de luxe dans lequel elle rend difficile voire impossible l'exploitation de produits contrefaisants. En effet, la présente invention rend difficile voire impossible l'accès aux données contenues dans des transpondeurs RFID authentiques pour les collecter ou pour les modifier afin de donner aux produits contrefaisants une vraisemblance d'authenticité.

La présente invention peut ainsi être utilisée afin de réaliser des inventaires de produits dans des espaces commerciaux ou de stockage et de détecter aisément tout transpondeur RFID qui ne serait pas authentique, et donc potentiellement associé à un produit contrefaisant.

De plus, la présente invention comprend de manière avantageuse des programmes informatiques, chacun étant configuré pour être mis en œuvre par au moins un processeur en connexion avec au moins une mémoire non transitoire et une source d'alimentation électrique.

Préférentiellement, la présente invention comprend un programme informatique configuré pour être implanté dans au moins un transpondeur RFID et un programme informatique configuré pour être implanté dans au moins un lecteur RFID par exemple et/ou dans au moins un module de cryptage et/ou dans au moins une base de donnée. Ces deux programmes étant aptes à mettre en œuvre la présente invention.

L'invention n'est pas limitée aux modes de réalisations précédemment décrits et s'étend à tous les modes de réalisation couverts par les revendications. En particulier, certaines étapes peuvent être réalisées selon un ordre différent et cela afin de s'adapter au besoin du domaine applicatif de la présente invention.

### REFERENCES

UID : Numéro d'identification, de préférence unique, de l'anglais « Unique Permanent Identification », d'un transpondeur RFID ;
A1 : Première série de nombres aléatoires ;
A2 : Deuxième série de nombres aléatoires ;
F1 : Première fonction de cryptage, de préférence non accessible au transpondeur RFID ;
F2 : Deuxième fonction de cryptage, de préférence non accessible au transpondeur RFID ;
F1' : Première fonction de cryptage, de préférence accessible au transpondeur RFID ;
F2' : Deuxième fonction de cryptage, de préférence accessible au transpondeur RFID ;
R1 : Premier résultat égal à F1(A1) de préférence F1(A1, A2) ;
R1' : Deuxième résultat égal à F1'(A1) de préférence F1'(A1, A2) ;
R2' : Troisième résultat égal à F2'(A2) de préférence F2'(A1, A2) ;
R2 : Quatrième résultat égal à F2(A2) de préférence F2(A1, A2) ;
10 : Lecteur RFID ;
11 : Module de Cryptage ;
12 : Base de données ;
12a : Passerelle de bases de données ;
12b : Base de données de transpondeurs RFID ;
12c : Base de données de produits ;
13 : Plateforme d'authentification ;
20 : Transpondeur RFID, TAG ;
21 : Transpondeur RFID, TAG ;
22 : Transpondeur RFID, TAG ;
23 : Transpondeur RFID, TAG ;
24 : Transpondeur RFID, TAG ;
100 : Signaux envoyés depuis le lecteur RFID vers le transpondeur RFID ;
110 : Envoi depuis le lecteur RFID vers le transpondeur RFID d'au moins une première série de nombre aléatoires A1 ;
120 : Envoi depuis le lecteur RFID vers le transpondeur RFID d'au moins un premier résultat R1 ;
130 : Envoi depuis le lecteur RFID vers le transpondeur RFID d'au moins une demande de numéro d'identification ;
200 : Signaux envoyés depuis le transpondeur RFID vers le lecteur RFID ;
210 : Envoi depuis le transpondeur RFID vers le lecteur RFID d'au moins une deuxième série de nombre aléatoires A2 ;
220 : Envoi depuis le transpondeur RFID vers le lecteur RFID d'au moins un troisième résultat R2' ;
230 : Envoi depuis le transpondeur RFID vers le lecteur RFID d'au moins un numéro d'identification ;
300 : Signaux envoyés depuis le module de cryptage vers le lecteur RFID ;
310 : Envoi depuis le module de cryptage vers le lecteur RFID d'au moins une première série de nombre aléatoires A1 ;
310a : Envoi depuis la plateforme d'authentification vers le lecteur RFID d'au moins une première série de nombre aléatoires A1 ;
310b : Envoi depuis le module de cryptage vers la plateforme d'authentification d'au moins une première série de nombre aléatoires A1 ;
320 : Envoi depuis le module de cryptage vers le lecteur RFID d'au moins un premier résultat R1 ;
320a : Envoi depuis la plateforme d'authentification vers le lecteur RFID d'au moins un premier résultat R1 ;
320b : Envoi depuis le module de cryptage vers la plateforme d'authentification d'au moins un premier résultat R1 ;
330 : Envoi depuis le module de cryptage vers le lecteur RFID d'au moins une commande de demande du numéro d'identification d'au moins un transpondeur RFID ;
330a : Envoi depuis la plateforme d'authentification vers le lecteur RFID d'au moins une commande de demande du numéro d'identification d'au moins un transpondeur RFID ;
330b : Envoi depuis le module de cryptage vers la plateforme d'authentification d'au moins une commande de demande du numéro d'identification d'au moins un transpondeur RFID ;
400 : Signaux envoyés depuis le lecteur RFID vers le module de cryptage ;
401a : Envoi depuis le lecteur RFID vers la plateforme d'authentification d'au moins une demande d'authentification ;
401b : Envoi depuis la plateforme d'authentification vers le module de cryptage d'au moins une demande d'au moins une première série de nombres aléatoires A1 ;
410 : Envoi depuis le lecteur RFID vers le module de cryptage d'au moins une deuxième série de nombres aléatoires A2 ;
410a : Envoi depuis le lecteur RFID vers la plateforme d'authentification d'au moins une deuxième série de nombres aléatoires A2 ;
410b : Envoi depuis la plateforme d'authentification vers le module de cryptage d'au moins une deuxième série de nombres aléatoires A2 ;
420 : Envoi depuis le lecteur RFID vers le module de cryptage d'au moins un troisième résultat R2' ;
420a : Envoi depuis le lecteur RFID vers la plateforme d'authentification d'au moins un troisième résultat R2' ;
420b : Envoi depuis la plateforme d'authentification vers le module de cryptage d'au moins un troisième résultat R2' ;
500 : Signaux envoyés depuis le lecteur RFID vers la base de données ;
510 : Envoi depuis le lecteur RFID vers la base de données d'au moins un numéro d'identification ;
510a : Envoi depuis le lecteur RFID vers la plateforme d'authentification d'au moins un numéro d'identification ;
510b : Envoi depuis la plateforme d'authentification vers la base de données d'au moins un numéro d'identification ;
510c : Envoi depuis la passerelle de bases de données vers la base de données de transpondeurs RFID d'au moins un numéro d'identification ;
510d : Envoi depuis la passerelle de bases de données vers la base de données de produits d'au moins un numéro d'identification ;
600 : Signaux envoyés depuis la base de données vers le lecteur RFID ;
610 : Envoi depuis la base de données vers le lecteur RFID d'au moins une donnée relative à un produit ;
610a : Envoi depuis la plateforme d'authentification vers le lecteur RFID d'au moins une donnée relative à un produit ;
610b : Envoi depuis la base de données vers la plateforme d'authentification d'au moins une donnée relative à un produit ;
610c : Envoi depuis la base de données de transpondeurs RFID vers la passerelle de bases de données d'au moins une information d'existence d'un transpondeur RFID ;
610d : Envoi depuis la base de données de produits vers la passerelle de bases de données d'au moins une information concernant un produit.

## Revendications

1. Procédé de communication sécurisée entre au moins un transpondeur RFID (20, 21, 22, 23, 24) comprenant au moins un numéro d'identification et au moins un lecteur RFID (10), le procédé comprenant au moins les étapes suivantes :
- Ledit au moins un lecteur RFID (10) envoie (110) audit au moins un transpondeur RFID (20, 21, 22, 23, 24) au moins une série de nombres aléatoires A1 ;
- Ledit au moins un transpondeur RFID (20, 21, 22, 23, 24) envoie (210) audit au moins un lecteur RFID (10) au moins une série de nombres aléatoires A2 ;
- Ledit au moins un lecteur RFID (10) envoie (120) audit au moins un transpondeur RFID (20, 21, 22, 23, 24) au moins un résultat R1, généré à partir au moins de ladite au moins une série de nombres aléatoires A1 et d'au moins une fonction de cryptage F1 enregistrée dans au moins une mémoire en dehors de l'au moins un transpondeur RFID (20, 21, 22, 23, 24) ;
- Après réception de l'au moins une série de nombres aléatoires A1 et de l'au moins un résultat R1 par ledit au moins un transpondeur RFID (20, 21, 22, 23, 24), ledit au moins un transpondeur RFID (20, 21, 22, 23, 24) compare ledit au moins un résultat R1 reçu avec au moins un résultat R1' généré à partir d'au moins ladite au moins une série de nombres aléatoires A1 reçue et d'au moins une fonction de cryptage F1' enregistrée dans au moins une mémoire dudit transpondeur RFID (20, 21, 22, 23, 24) ;
- Après l'étape de comparaison dudit au moins un résultat R1 reçu avec l'au moins un résultat R1' et si ledit au moins un résultat R1' est égal audit au moins un résultat R1 reçu, alors ledit au moins un transpondeur RFID (20, 21, 22, 23, 24) :
▪ permute depuis un mode de communication précédemment verrouillé vers un mode de communication déverrouillé permettant audit au moins un transpondeur RFID (20, 21, 22, 23, 24) de transmettre de préférence sur demande au moins ledit au moins un numéro d'identification à l'au moins un lecteur RFID (10) ;
▪ envoie (220) audit au moins un lecteur RFID (10) au moins un résultat R2', généré à partir au moins de ladite au moins une série de nombres aléatoires A2 et d'au moins une fonction de cryptage F2' enregistrée dans au moins une mémoire dudit transpondeur RFID (20, 21, 22, 23, 24) ;
- Après l'étape de comparaison dudit au moins un résultat R1 reçu avec l'au moins un résultat R1' et si ledit au moins un résultat R1' est différent dudit au moins un résultat R1 reçu, alors ledit au moins un transpondeur RFID (20, 21, 22, 23, 24) reste dans ledit mode de communication verrouillé empêchant audit au moins un transpondeur RFID (20, 21, 22, 23, 24) de transmettre sur demande au moins ledit au moins un numéro d'identification à l'au moins un lecteur RFID (10) ;
- Après réception par ledit au moins un lecteur RFID (10) de l'au moins une série de nombres aléatoires A2 et de l'au moins un résultat R2', ledit au moins un lecteur RFID (10) :
▪ compare ledit au moins un résultat R2' reçu avec au moins un résultat R2 généré à partir au moins de ladite au moins une série de nombres aléatoires A2 reçue et d'au moins une fonction de cryptage F2 enregistrée dans au moins une mémoire en dehors de l'au moins un transpondeur RFID (20, 21, 22, 23, 24) ;
▪ et si ledit au moins un résultat R2' reçu est égal à l'au moins un résultat R2, alors ledit au moins un lecteur RFID (10) envoie (130) audit au moins un transpondeur RFID (20, 21, 22, 23, 24) au moins une demande dudit au moins un numéro d'identification ;
- De préférence après réception de ladite demande dudit au moins un numéro d'identification envoyée par ledit au moins un lecteur RFID (10), et si ledit au moins un transpondeur RFID (20, 21, 22, 23, 24) est dans ledit mode de communication déverrouillé, alors de préférence ledit au moins un transpondeur RFID (20, 21, 22, 23, 24) envoie (230) audit au moins un lecteur RFID (10) au moins ledit au moins un numéro d'identification.

2. Procédé selon la revendication précédente dans lequel le calcul de l'au moins un résultat R2 est réalisé avant l'envoi par ledit au moins un transpondeur RFID (20, 21, 22, 23, 24) audit au moins un lecteur RFID (10) de l'au moins un résultat R2'.

3. Procédé selon l'une quelconque des revendications précédentes dans lequel le calcul de l'au moins un résultat R2 est réalisé après l'envoi par ledit au moins un transpondeur RFID (20, 21, 22, 23, 24) audit au moins un lecteur RFID (10) de l'au moins un résultat R2'.

4. Procédé selon l'une quelconque des revendications précédentes dans lequel ledit au moins un résultat R1 est généré à partir au moins de ladite au moins une série de nombres aléatoires A1, de ladite au moins une série de nombres aléatoires A2 et de ladite au moins une fonction de cryptage F1, et dans lequel ledit au moins un résultat R1' est généré à partir au moins de ladite au moins une série de nombres aléatoires A1, de ladite au moins une série de nombres aléatoires A2 et de ladite au moins une fonction de cryptage F1'.

5. Procédé selon l'une quelconque des revendications précédentes dans lequel ledit au moins un résultat R2' est généré à partir au moins de ladite au moins une série de nombres aléatoires A1, de ladite au moins une série de nombres aléatoires A2 et de ladite au moins une fonction de cryptage F2, et dans lequel ledit au moins un résultat R2 est généré à partir au moins de ladite au moins une série de nombres aléatoires A1, de ladite au moins une série de nombres aléatoires A2 et de ladite au moins une fonction de cryptage F2'.

6. Procédé selon l'une quelconque des revendications 1 à 3 dans lequel l'envoi (210) par ledit au moins un transpondeur RFID (20, 21, 22, 23, 24) audit au moins un lecteur RFID (10) de l'au moins une série de nombres aléatoires A2 est réalisé après l'envoi (120) par ledit au moins un lecteur RFID (10) audit au moins un transpondeur RFID (20, 21, 22, 23, 24) de l'au moins un résultat R1.

7. Procédé selon l'une quelconque des revendications précédentes dans lequel ledit au moins un lecteur RFID (10) est en communication filaire et/ou non filaire avec au moins une base de données (12, 12a, 12b, 12c).

8. Procédé selon la revendication précédente dans lequel, après réception par ledit au moins un lecteur RFID (10) dudit au moins un numéro d'identification envoyé par ledit au moins un transpondeur RFID (20, 21, 22, 23, 24), ledit au moins un lecteur RFID (10) envoie à ladite au moins une base de données (12, 12a, 12b, 12c) au moins ledit au moins un numéro d'identification dudit au moins un transpondeur RFID (20, 21, 22, 23, 24).

9. Procédé selon la revendication précédente dans lequel, en réponse audit envoi à ladite au moins une base de données (12, 12a, 12b, 12c) dudit au moins un numéro d'identification dudit au moins un transpondeur RFID (20, 21, 22, 23, 24), ledit au moins un lecteur RFID (10) reçoit depuis ladite au moins une base de données (12, 12a, 12b, 12c) des données associées audit numéro d'identification de l'au moins un transpondeur RFID (20, 21, 22, 23, 24) après identification dudit au moins un transpondeur RFID (20, 21, 22, 23, 24) par ladite au moins une base de données (12, 12a, 12b, 12c) à partir dudit au moins un numéro d'identification.

10. Procédé selon l'une quelconque des revendications précédentes dans lequel ledit au moins un lecteur RFID (10) est en communication filaire et/ou non filaire avec au moins un module de cryptage (11), et dans lequel ledit au moins un lecteur RFID (10) reçoit depuis ledit au moins un module de cryptage (11) au moins ladite au moins une série de nombres aléatoires A1.

11. Procédé selon l'une quelconque des revendications précédentes dans lequel ledit au moins un transpondeur RFID (20, 21, 22, 23, 24) est associé à un produit manufacturé disposé dans un espace commercial de vente ou un entrepôt de stockage.

12. Système d'inventaire et d'authentification RFID sécurisé configuré pour mettre en œuvre un procédé de communication sécurisée selon l'une quelconque des revendications précédentes, comprenant au moins un transpondeur RFID (20, 21, 22, 23, 24) comprenant au moins un numéro d'identification et étant associé à au moins un produit manufacturé disposé dans un espace commercial, et au moins un lecteur RFID (10), ledit système étant **caractérisé en ce qu'**il est configuré de manière à ce que :
- Ledit au moins un lecteur RFID (10) envoie (110) audit au moins un transpondeur RFID (20, 21, 22, 23, 24) au moins une série de nombres aléatoires A1 ;
- Ledit au moins un transpondeur RFID (20, 21, 22, 23, 24) envoie (210) audit au moins un lecteur RFID (10) au moins une série de nombres aléatoires A2 ;
- Ledit au moins un lecteur RFID (10) envoie (120) audit au moins un transpondeur RFID (20, 21, 22, 23, 24) au moins un résultat R1, généré à partir au moins de ladite au moins une série de nombres aléatoires A1 et d'au moins une fonction de cryptage F1 enregistrée dans au moins une mémoire en dehors de l'au moins un transpondeur RFID (20, 21, 22, 23, 24) ;
- Après réception de l'au moins une série de nombres aléatoires A1 et de l'au moins un résultat R1 par ledit au moins un transpondeur RFID (20, 21, 22, 23, 24), ledit au moins un transpondeur RFID (20, 21, 22, 23, 24) compare ledit au moins un résultat R1 reçu avec au moins un résultat R1' généré à partir d'au moins ladite au moins une série de nombres aléatoires A1 reçue et d'au moins une fonction de cryptage F1' enregistrée dans au moins une mémoire dudit transpondeur RFID (20, 21, 22, 23, 24) ;
- Après l'étape de comparaison dudit au moins un résultat R1 reçu avec l'au moins un résultat R1' et si ledit au moins un résultat R1' est égal audit au moins un résultat R1 reçu, alors ledit au moins un transpondeur RFID (20, 21, 22, 23, 24) :
▪ permute depuis un mode de communication précédemment verrouillé vers un mode de communication déverrouillé permettant audit au moins un transpondeur RFID (20, 21, 22, 23, 24) de transmettre de préférence sur demande au moins ledit au moins un numéro d'identification à l'au moins un lecteur RFID (10) ;
▪ envoie (220) audit au moins un lecteur RFID (10) au moins un résultat R2', généré à partir au moins de ladite au moins une série de nombres aléatoires A2 et d'au moins une fonction de cryptage F2' enregistrée dans au moins une mémoire dudit transpondeur RFID (20, 21, 22, 23, 24) ;
- Après l'étape de comparaison dudit au moins un résultat R1 reçu avec l'au moins un résultat R1' et si ledit au moins un résultat R1' est différent dudit au moins un résultat R1 reçu, alors ledit au moins un transpondeur RFID (20, 21, 22, 23, 24) reste dans ledit mode de communication verrouillé empêchant audit au moins un transpondeur RFID (20, 21, 22, 23, 24) de transmettre sur demande au moins ledit au moins un numéro d'identification à l'au moins un lecteur RFID (10) ;
- Après réception par ledit au moins un lecteur RFID (10) de l'au moins une série de nombres aléatoires A2 et de l'au moins un résultat R2', ledit au moins un lecteur RFID (10) :
▪ compare ledit au moins un résultat R2' reçu avec au moins un résultat R2 généré à partir au moins de ladite au moins une série de nombres aléatoires A2 reçue et d'au moins une fonction de cryptage F2 enregistrée dans au moins une mémoire en dehors de l'au moins un transpondeur RFID (20, 21, 22, 23, 24) ;
▪ si ledit au moins un résultat R2' reçu est égal à l'au moins un résultat R2, alors ledit au moins un lecteur RFID (10) envoie (130) audit au moins un transpondeur RFID (20, 21, 22, 23, 24) au moins une demande dudit au moins un numéro d'identification ;
- De préférence après réception de ladite demande dudit au moins un numéro d'identification envoyée par ledit au moins un lecteur RFID (10), et si ledit au moins un transpondeur RFID (20, 21, 22, 23, 24) est dans ledit mode de communication déverrouillé, alors de préférence ledit au moins un transpondeur RFID (20, 21, 22, 23, 24) envoie (230) audit au moins un lecteur RFID (10) au moins ledit au moins un numéro d'identification.

13. Produit programme d'ordinateur sauvegardé dans au moins une mémoire non transitoire d'au moins un transpondeur RFID (20, 21, 22, 23, 24) comprenant au moins un numéro d'identification et configuré pour exécuter au moins les étapes suivantes effectuées par ledit au moins un transpondeur RFID (20, 21, 22, 23, 24) :
- Ledit au moins un transpondeur RFID (20, 21, 22, 23, 24) envoie (210) à au moins un lecteur RFID (10) au moins une série de nombres aléatoires A2 ;
- Après réception d'au moins une série de nombres aléatoires A1 et d'au moins un résultat R1 par ledit au moins un transpondeur RFID (20, 21, 22, 23, 24), ledit résultat R1 étant envoyé par ledit au moins un lecteur RFID (10) et étant généré à partir au moins de ladite au moins une série de nombres aléatoires A1 et d'au moins une fonction de cryptage F1, ledit au moins un transpondeur RFID (20, 21, 22, 23, 24) compare ledit au moins un résultat R1 reçu avec au moins un résultat R1' généré à partir d'au moins ladite au moins une série de nombres aléatoires A1 reçue et d'au moins une fonction de cryptage F1' enregistrée dans au moins une mémoire dudit transpondeur RFID (20, 21, 22, 23, 24) ;
- Après l'étape de comparaison dudit au moins un résultat R1 reçu avec l'au moins un résultat R1' et si ledit au moins un résultat R1' est égal audit au moins un résultat R1 reçu, alors ledit au moins un transpondeur RFID (20, 21, 22, 23, 24) :
▪ permute depuis un mode de communication précédemment verrouillé vers un mode de communication déverrouillé permettant audit au moins un transpondeur RFID (20, 21, 22, 23, 24) de transmettre de préférence sur demande au moins ledit au moins un numéro d'identification à l'au moins un lecteur RFID (10) ;
▪ envoie (220) audit au moins un lecteur RFID (10) au moins un résultat R2', généré à partir au moins de ladite au moins une série de nombres aléatoires A2 et d'au moins une fonction de cryptage F2' enregistrée dans au moins une mémoire dudit transpondeur RFID (20, 21, 22, 23, 24) ;
- Après l'étape de comparaison dudit au moins un résultat R1 reçu avec l'au moins un résultat R1' et si ledit au moins un résultat R1' est différent dudit au moins un résultat R1 reçu, alors ledit au moins un transpondeur RFID (20, 21, 22, 23, 24) reste dans ledit mode de communication verrouillé empêchant audit au moins un transpondeur RFID (20, 21, 22, 23, 24) de transmettre sur demande au moins ledit au moins un numéro d'identification à l'au moins un lecteur RFID (10) ;
- De préférence après réception d'une demande dudit au moins un numéro d'identification, et si ledit au moins un transpondeur RFID (20, 21, 22, 23, 24) est dans ledit mode de communication déverrouillé, alors de préférence ledit au moins un transpondeur RFID (20, 21, 22, 23, 24) envoie (230) audit au moins un lecteur RFID (10) au moins ledit au moins un numéro d'identification.

14. Transpondeur RFID (20, 21, 22, 23, 24) comprenant au moins une antenne, au moins un micro-processeur et au moins une mémoire non transitoire à l'intérieur de laquelle est sauvegardé le produit programme d'ordinateur selon la revendication précédente.

15. Produit programme d'ordinateur sauvegardé dans au moins une mémoire non transitoire en dehors d'au moins un transpondeur RFID (20, 21, 22, 23, 24), et configuré pour exécuter au moins les étapes suivantes effectuées par au moins un lecteur RFID (10) :
- Ledit au moins un lecteur RFID (10) envoie (110) audit au moins un transpondeur RFID (20, 21, 22, 23, 24) au moins une série de nombres aléatoires A1 ;
- Ledit au moins un lecteur RFID (10) envoie (120) audit au moins un transpondeur RFID (20, 21, 22, 23, 24) au moins un résultat R1, généré à partir au moins de ladite au moins une série de nombres aléatoires A1 et d'au moins une fonction de cryptage F1 enregistrée dans au moins une mémoire en dehors de l'au moins un transpondeur RFID (20, 21, 22, 23, 24) ;
- Après réception d'au moins une série de nombres aléatoires A2 et d'au moins un résultat R2' par ledit au moins un lecteur RFID (10) , ledit résultat R2' étant envoyé par ledit au moins un transpondeur RFID (20, 21, 22, 23, 24) et étant généré à partir au moins de ladite au moins une série de nombres aléatoires A2 et d'au moins une fonction de cryptage F2', ledit au moins un lecteur RFID (10) :
▪ compare ledit au moins un résultat R2' reçu avec au moins un résultat R2 généré à partir au moins de ladite au moins une série de nombres aléatoires A2 reçue et d'au moins une fonction de cryptage F2 enregistrée dans au moins une mémoire en dehors de l'au moins un transpondeur RFID (20, 21, 22, 23, 24) ;
▪ si ledit au moins un résultat R2' reçu est égal à l'au moins un résultat R2, alors ledit au moins un lecteur RFID (10) envoie (130) audit au moins un transpondeur RFID (20, 21, 22, 23, 24) au moins une demande d'au moins un numéro d'identification.

## Patentansprüche

1. Verfahren zur gesicherten Kommunikation zwischen mindestens einem RFID-Transponder (20, 21, 22, 23, 24), der mindestens eine Identifikationsnummer umfasst, und mindestens einem RFID-Leser (10), wobei das Verfahren mindestens die folgenden Schritte umfasst:
- der mindestens eine RFID-Leser (10) sendet (110) mindestens eine Reihe von Zufallszahlen A1 an den mindestens einen RFID-Transponder (20, 21, 22, 23, 24);
- der mindestens eine RFID-Transponder (20, 21, 22, 23, 24) sendet (210) mindestens eine Reihe von Zufallszahlen A2 an den mindestens einen RFID-Leser (10);
- der mindestens eine RFID-Leser (10) sendet (120) mindestens ein Ergebnis R1, das auf Grundlage mindestens der mindestens einen Reihe von Zufallszahlen A1 und mindestens einer Verschlüsselungsfunktion F1 erzeugt wurde, die in mindestens einem Speicher außerhalb des mindestens einen RFID-Transponders (20, 21, 22, 23, 24) gespeichert ist, an den mindestens einen RFID-Transponder (20, 21, 22, 23, 24);
- nach Empfang der mindestens einen Reihe von Zufallszahlen A1 und des mindestens einen Ergebnisses R1 durch den mindestens einen RFID-Transponder (20, 21, 22, 23, 24) vergleicht der mindestens eine RFID-Transponder (20, 21, 22, 23, 24) das mindestens eine empfangene Ergebnis R1 mit mindestens einem Ergebnis R1', das auf Grundlage mindestens der mindestens einen empfangenen Reihe von Zufallszahlen A1 und mindestens einer Verschlüsselungsfunktion F1' erzeugt wurde, die in mindestens einem Speicher des RFID-Transponders (20, 21, 22, 23, 24) gespeichert ist;
- nach dem Schritt des Vergleichens des mindestens einen empfangenen Ergebnisses R1 mit dem mindestens einen Ergebnis R1', und wenn das mindestens eine Ergebnis R1' gleich dem mindestens einen empfangenen Ergebnis R1 ist, der mindestens eine RFID-Transponder (20, 21, 22, 23, 24):
-- von einem zuvor gesperrten Kommunikationsmodus in einen ungesperrten Kommunikationsmodus wechselt, der es dem mindestens einen RFID-Transponder (20, 21, 22, 23, 24) ermöglicht, mindestens die mindestens eine Identifikationsnummer, vorzugsweise auf Anforderung, an den mindestens einen RFID-Leser (10) zu übertragen;
-- mindestens ein Ergebnis R2', das auf Grundlage mindestens der mindestens einen Reihe von Zufallszahlen A2 und mindestens einer Verschlüsselungsfunktion F2' erzeugt wurde, die in mindestens einem Speicher des RFID-Transponders (20, 21, 22, 23, 24) gespeichert ist, an den mindestens einen RFID-Leser (10) sendet (220);
- nach dem Schritt des Vergleichens des mindestens einen empfangenen Ergebnisses R1 mit dem mindestens einen Ergebnis R1', und wenn sich das mindestens eine Ergebnis R1' von dem mindestens einen empfangenen Ergebnis R1 unterscheidet, der mindestens eine RFID-Transponder (20, 21, 22, 23, 24) im gesperrten Kommunikationsmodus bleibt, wodurch der mindestens eine RFID-Transponder (20, 21, 22, 23, 24) daran gehindert wird, auf Anforderung mindestens die mindestens eine Identifikationsnummer an den mindestens einen RFID-Leser (10) zu übertragen;
- nach Empfang der mindestens einen Reihe von Zufallszahlen A2 und des mindestens einen Ergebnisses R2' durch den mindestens einen RFID-Leser (10) der mindestens eine RFID-Leser (10):
-- das mindestens eine empfangene Ergebnis R2' mit mindestens einem Ergebnis R2 vergleicht, das auf Grundlage mindestens der mindestens einen empfangenen Reihe von Zufallszahlen A2 und mindestens einer Verschlüsselungsfunktion F2 erzeugt wurde, die in mindestens einem Speicher außerhalb des mindestens einen RFID-Transponders (20, 21, 22, 23, 24) gespeichert ist;
-- und wenn das mindestens eine empfangene Ergebnis R2' gleich dem mindestens einen Ergebnis R2 ist, der mindestens eine RFID-Leser (10) mindestens eine Anforderung der mindestens einen Identifikationsnummer an den mindestens einen RFID-Transponder (20, 21, 22, 23, 24) sendet (130);
- vorzugsweise nach Empfang der von dem mindestens einen RFID-Leser (10) gesendeten Anforderung der mindestens einen Identifikationsnummer, und wenn sich der mindestens eine RFID-Transponder (20, 21, 22, 23, 24) in dem ungesperrten Kommunikationsmodus befindet, vorzugsweise der mindestens eine RFID-Transponder (20, 21, 22, 23, 24) mindestens die mindestens eine Identifikationsnummer an den mindestens einen RFID-Leser (10) sendet (230).

2. Verfahren nach dem vorstehenden Anspruch, wobei das Berechnen des mindestens einen Ergebnisses R2 vor dem Senden des mindestens einen Ergebnisses R2' durch den mindestens einen RFID-Transponder (20, 21, 22, 23, 24) an den mindestens einen RFID-Leser (10) ausgeführt wird.

3. Verfahren nach einem der vorstehenden Ansprüche, wobei das Berechnen des mindestens einen Ergebnisses R2 nach dem Senden des mindestens einen Ergebnisses R2' durch den mindestens einen RFID-Transponder (20, 21, 22, 23, 24) an den mindestens einen RFID-Leser (10) ausgeführt wird.

4. Verfahren nach einem der vorstehenden Ansprüche, wobei das mindestens eine Ergebnis R1 auf Grundlage mindestens der mindestens einen Reihe von Zufallszahlen A1, der mindestens einen Reihe von Zufallszahlen A2 und der mindestens einen Verschlüsselungsfunktion F1 erzeugt wird, und wobei das mindestens eine Ergebnis R1' auf Grundlage mindestens der mindestens einen Reihe von Zufallszahlen A1, der mindestens einen Reihe von Zufallszahlen A2 und der mindestens einen Verschlüsselungsfunktion F1' erzeugt wird.

5. Verfahren nach einem der vorstehenden Ansprüche, wobei das mindestens eine Ergebnis R2' auf Grundlage mindestens der mindestens einen Reihe von Zufallszahlen A1, der mindestens einen Reihe von Zufallszahlen A2 und der mindestens einen Verschlüsselungsfunktion F2 erzeugt wird, und wobei das mindestens eine Ergebnis R2 auf Grundlage mindestens der mindestens einen Reihe von Zufallszahlen A1, der mindestens einen Reihe von Zufallszahlen A2 und der mindestens einen Verschlüsselungsfunktion F2' erzeugt wird.

6. Verfahren nach einem der Ansprüche 1 bis 3, wobei das Senden (210) der mindestens einen Reihe von Zufallszahlen A2 durch den mindestens einen RFID-Transponder (20, 21, 22, 23, 24) an den mindestens einen RFID-Leser (10) nach dem Senden (120) des mindestens einen Ergebnisses R1 durch den mindestens einen RFID-Leser (10) an den mindestens einen RFID-Transponder (20, 21, 22, 23, 24) ausgeführt wird.

7. Verfahren nach einem der vorstehenden Ansprüche, wobei der mindestens eine RFID-Leser (10) mit mindestens einer Datenbank (12, 12a, 12b, 12c) in drahtgebundener und/oder drahtloser Kommunikation steht.

8. Verfahren nach dem vorstehenden Anspruch, wobei der mindestens eine RFID-Leser (10) nach Empfang der mindestens einen von dem mindestens einen RFID-Transponder (20, 21, 22, 23, 24) gesendeten Identifikationsnummer durch den mindestens einen RFID-Leser (10) mindestens die mindestens eine Identifikationsnummer des mindestens einen RFID-Transponders (20, 21, 22, 23, 24) an die mindestens eine Datenbank (12, 12a, 12b, 12c) sendet.

9. Verfahren nach dem vorstehenden Anspruch, wobei der mindestens eine RFID-Leser (10) in Reaktion auf das Senden der mindestens einen Identifikationsnummer des mindestens einen RFID-Transponders (20, 21, 22, 23, 24) an die mindestens eine Datenbank (12, 12a, 12b, 12c) nach Identifikation des mindestens einen RFID-Transponders (20, 21, 22, 23, 24) durch die mindestens eine Datenbank (12, 12a, 12b, 12c) auf Grundlage der mindestens einen Identifikationsnummer Daten von der mindestens einen Datenbank (12, 12a, 12b, 12c) empfängt, die mit der Identifikationsnummer des mindestens einen RFID-Transponders (20, 21, 22, 23, 24) verknüpft sind.

10. Verfahren nach einem der vorstehenden Ansprüche, wobei der mindestens eine RFID-Leser (10) mit mindestens einem Verschlüsselungsmodul (11) in drahtgebundener und/oder drahtloser Kommunikation steht, und wobei der mindestens eine RFID-Leser (10) von dem mindestens einen Verschlüsselungsmodul (11) mindestens die mindestens eine Reihe von Zufallszahlen A1 empfängt.

11. Verfahren nach einem der vorstehenden Ansprüche, wobei der mindestens eine RFID-Transponder (20, 21, 22, 23, 24) mit einem Erzeugnis verknüpft ist, das sich in einem gewerblichen Verkaufsraum oder einem Lager befindet.

12. Gesichertes RFID-Inventur- und Authentifizierungssystem, das dafür ausgelegt ist, ein Verfahren zur gesicherten Kommunikation nach einem der vorstehenden Ansprüche zu implementieren, das mindestens einen RFID-Transponder (20, 21, 22, 23, 24), der mindestens eine Identifikationsnummer umfasst und mit mindestens einem Erzeugnis verknüpft ist, das sich in einem gewerblichen Raum befindet, und mindestens einen RFID-Leser (10) umfasst, wobei das System **dadurch gekennzeichnet ist, dass** es so ausgelegt ist, dass:
- der mindestens eine RFID-Leser (10) mindestens eine Reihe von Zufallszahlen A1 an den mindestens einen RFID-Transponder (20, 21, 22, 23, 24) sendet (110);
- der mindestens eine RFID-Transponder (20, 21, 22, 23, 24) mindestens eine Reihe von Zufallszahlen A2 an den mindestens einen RFID-Leser (10) sendet (210);
- der mindestens eine RFID-Leser (10) mindestens ein Ergebnis R1, das auf Grundlage mindestens der mindestens einen Reihe von Zufallszahlen A1 und mindestens einer Verschlüsselungsfunktion F1 erzeugt wurde, die in mindestens einem Speicher außerhalb des mindestens einen RFID-Transponders (20, 21, 22, 23, 24) gespeichert ist, an den mindestens einen RFID-Transponder (20, 21, 22, 23, 24) sendet (120);
- nach Empfang der mindestens einen Reihe von Zufallszahlen A1 und des mindestens einen Ergebnisses R1 durch den mindestens einen RFID-Transponder (20, 21, 22, 23, 24) der mindestens eine RFID-Transponder (20, 21, 22, 23, 24) das mindestens eine empfangene Ergebnis R1 mit mindestens einem Ergebnis R1' vergleicht, das auf Grundlage mindestens der mindestens einen empfangenen Reihe von Zufallszahlen A1 und mindestens einer Verschlüsselungsfunktion F1' erzeugt wurde, die in mindestens einem Speicher des RFID-Transponders (20, 21, 22, 23, 24) gespeichert ist;
- nach dem Schritt des Vergleichens des mindestens einen empfangenen Ergebnisses R1 mit dem mindestens einen Ergebnis R1', und wenn das mindestens eine Ergebnis R1' gleich dem mindestens einen empfangenen Ergebnis R1 ist, der mindestens eine RFID-Transponder (20, 21, 22, 23, 24):
-- von einem zuvor gesperrten Kommunikationsmodus in einen ungesperrten Kommunikationsmodus wechselt, der es dem mindestens einen RFID-Transponder (20, 21, 22, 23, 24) ermöglicht, mindestens die mindestens eine Identifikationsnummer, vorzugsweise auf Anforderung, an den mindestens einen RFID-Leser (10) zu übertragen;
-- mindestens ein Ergebnis R2', das auf Grundlage mindestens der mindestens einen Reihe von Zufallszahlen A2 und mindestens einer Verschlüsselungsfunktion F2' erzeugt wurde, die in mindestens einem Speicher des RFID-Transponders (20, 21, 22, 23, 24) gespeichert ist, an den mindestens einen RFID-Leser (10) sendet (220);
- nach dem Schritt des Vergleichens des mindestens einen empfangenen Ergebnisses R1 mit dem mindestens einen Ergebnis R1', und wenn sich das mindestens eine Ergebnis R1' von dem mindestens einen empfangenen Ergebnis R1 unterscheidet, der mindestens eine RFID-Transponder (20, 21, 22, 23, 24) im gesperrten Kommunikationsmodus bleibt, wodurch der mindestens eine RFID-Transponder (20, 21, 22, 23, 24) daran gehindert wird, auf Anforderung mindestens die mindestens eine Identifikationsnummer an den mindestens einen RFID-Leser (10) zu übertragen;
- nach Empfang der mindestens einen Reihe von Zufallszahlen A2 und des mindestens einen Ergebnisses R2' durch den mindestens einen RFID-Leser (10) der mindestens eine RFID-Leser (10):
-- das mindestens eine empfangene Ergebnis R2' mit mindestens einem Ergebnis R2 vergleicht, das auf Grundlage mindestens der mindestens einen empfangenen Reihe von Zufallszahlen A2 und mindestens einer Verschlüsselungsfunktion F2 erzeugt wurde, die in mindestens einem Speicher außerhalb des mindestens einen RFID-Transponders (20, 21, 22, 23, 24) gespeichert ist;
-- wenn das mindestens eine empfangene Ergebnis R2' gleich dem mindestens einen Ergebnis R2 ist, der mindestens eine RFID-Leser (10) mindestens eine Anforderung der mindestens einen Identifikationsnummer an den mindestens einen RFID-Transponder (20, 21, 22, 23, 24) sendet (130);
- vorzugsweise nach Empfang der von dem mindestens einen RFID-Leser (10) gesendeten Anforderung der mindestens einen Identifikationsnummer, und wenn sich der mindestens eine RFID-Transponder (20, 21, 22, 23, 24) in dem ungesperrten Kommunikationsmodus befindet, vorzugsweise der mindestens eine RFID-Transponder (20, 21, 22, 23, 24) mindestens die mindestens eine Identifikationsnummer an den mindestens einen RFID-Leser (10) sendet (230).

13. Computerprogrammprodukt, das in mindestens einem nichtflüchtigen Speicher mindestens eines RFID-Transponders (20, 21, 22, 23, 24) gespeichert ist, der mindestens eine Identifikationsnummer umfasst, und dafür ausgelegt ist, mindestens die folgenden Schritte auszuführen, die von dem mindestens einen RFID-Transponder (20, 21, 22, 23, 24) durchgeführt werden:
- der mindestens eine RFID-Transponder (20, 21, 22, 23, 24) sendet (210) mindestens eine Reihe von Zufallszahlen A2 an mindestens einen RFID-Leser (10);
- nach Empfang mindestens einer Reihe von Zufallszahlen A1 und mindestens eines Ergebnisses R1 durch den mindestens einen RFID-Transponder (20, 21, 22, 23, 24), wobei das Ergebnis R1 von dem mindestens einen RFID-Leser (10) gesendet wird und auf Grundlage mindestens der mindestens einen Reihe von Zufallszahlen A1 und mindestens einer Verschlüsselungsfunktion F1 erzeugt wurde, vergleicht der mindestens eine RFID-Transponder (20, 21, 22, 23, 24) das mindestens eine empfangene Ergebnis R1 mit mindestens einem Ergebnis R1', das auf Grundlage mindestens der mindestens einen empfangenen Reihe von Zufallszahlen A1 und mindestens einer Verschlüsselungsfunktion F1' erzeugt wurde, die in mindestens einem Speicher des RFID-Transponder (20, 21, 22, 23, 24) gespeichert ist;
- nach dem Schritt des Vergleichens des mindestens einen empfangenen Ergebnisses R1 mit dem mindestens einen Ergebnis R1', und wenn das mindestens eine Ergebnis R1' gleich dem mindestens einen empfangenen Ergebnis R1 ist, der mindestens eine RFID-Transponder (20, 21, 22, 23, 24):
-- von einem zuvor gesperrten Kommunikationsmodus in einen ungesperrten Kommunikationsmodus wechselt, der es dem mindestens einen RFID-Transponder (20, 21, 22, 23, 24) ermöglicht, mindestens die mindestens eine Identifikationsnummer, vorzugsweise auf Anforderung, an den mindestens einen RFID-Leser (10) zu übertragen;
-- mindestens ein Ergebnis R2', das auf Grundlage mindestens der mindestens einen Reihe von Zufallszahlen A2 und mindestens einer Verschlüsselungsfunktion F2' erzeugt wurde, die in mindestens einem Speicher des RFID-Transponders (20, 21, 22, 23, 24) gespeichert ist, an den mindestens einen RFID-Leser (10) sendet (220);
- nach dem Schritt des Vergleichens des mindestens einen empfangenen Ergebnisses R1 mit dem mindestens einen Ergebnis R1', und wenn sich das mindestens eine Ergebnis R1' von dem mindestens einen empfangenen Ergebnis R1 unterscheidet, der mindestens eine RFID-Transponder (20, 21, 22, 23, 24) im gesperrten Kommunikationsmodus bleibt, wodurch der mindestens eine RFID-Transponder (20, 21, 22, 23, 24) daran gehindert wird, auf Anforderung mindestens die mindestens eine Identifikationsnummer an den mindestens einen RFID-Leser (10) zu übertragen;
- vorzugsweise nach Empfang einer Anforderung der mindestens einen Identifikationsnummer, und wenn sich der mindestens eine RFID-Transponder (20, 21, 22, 23, 24) in dem ungesperrten Kommunikationsmodus befindet, vorzugsweise der mindestens eine RFID-Transponder (20, 21, 22, 23, 24) mindestens die mindestens eine Identifikationsnummer an den mindestens einen RFID-Leser (10) sendet (230).

14. RFID-Transponder (20, 21, 22, 23, 24), der mindestens eine Antenne, mindestens einen Mikroprozessor und mindestens einen nichtflüchtigen Speicher umfasst, in dem das Computerprogrammprodukt nach dem vorstehenden Anspruch gespeichert ist.

15. Computerprogrammprodukt, das in mindestens einem nichtflüchtigen Speicher außerhalb mindestens eines RFID-Transponders (20, 21, 22, 23, 24) gespeichert und dafür ausgelegt ist, mindestens die folgenden Schritte auszuführen, die von mindestens einem RFID-Leser (10) durchgeführt werden:
- der mindestens eine RFID-Leser (10) sendet (110) mindestens eine Reihe von Zufallszahlen A1 an den mindestens einen RFID-Transponder (20, 21, 22, 23, 24);
- der mindestens eine RFID-Leser (10) sendet (120) mindestens ein Ergebnis R1, das auf Grundlage mindestens der mindestens einen Reihe von Zufallszahlen A1 und mindestens einer Verschlüsselungsfunktion F1 erzeugt wurde, die in mindestens einem Speicher außerhalb des mindestens einen RFID-Transponders (20, 21, 22, 23, 24) gespeichert ist, an den mindestens einen RFID-Transponder (20, 21, 22, 23, 24);
- nach Empfang von mindestens einer Reihe von Zufallszahlen A2 und mindestens einem Ergebnisses R2' durch den mindestens einen RFID-Leser (10), wobei das Ergebnis R2' von dem mindestens einen RFID-Transponder (20, 21, 22, 23, 24) gesendet wird und auf Grundlage mindestens der mindestens einen Reihe von Zufallszahlen A2 und mindestens einer Verschlüsselungsfunktion F2' erzeugt wurde, der mindestens eine RFID-Leser (10):
-- das mindestens eine empfangene Ergebnis R2' mit mindestens einem Ergebnis R2 vergleicht, das auf Grundlage mindestens der mindestens einen empfangenen Reihe von Zufallszahlen A2 und mindestens einer Verschlüsselungsfunktion F2 erzeugt wurde, die in mindestens einem Speicher außerhalb des mindestens einen RFID-Transponders (20, 21, 22, 23, 24) gespeichert ist;
-- wenn das mindestens eine empfangene Ergebnis R2' gleich dem mindestens einen Ergebnis R2 ist, der mindestens eine RFID-Leser (10) mindestens eine Anforderung mindestens einer Identifikationsnummer an den mindestens einen RFID-Transponder (20, 21, 22, 23, 24) sendet (130).

## Claims

1. Method for secure communication between at least one RFID transponder (20, 21, 22, 23, 24) comprising at least one identification number and at least one RFID reader (10), the method comprising at least the following steps:
- Said at least one RFID reader (10) sends (110) to said at least one RFID transponder (20, 21, 22, 23, 24), at least one series of random numbers A1;
- Said at least one RFID transponder (20, 21, 22, 23, 24) sends (210) to said at least one RFID reader (10), at least one series of random numbers A2;
- Said at least one RFID reader (10) sends (120) to said at least one RFID transponder (20, 21, 22, 23, 24), at least one result R1, generated from at least said at least one series of random numbers A1, generated from at least said at least one series of random numbers A1 and at least one encryption function F1 recorded in at least one memory outside of the at least one RFID transponder (20, 21, 22, 23, 24);
- After receipt of the at least one series of random numbers A1 and of the at least one result R1 by said at least one RFID transponder (20, 21, 22, 23, 24), said at least one RFID transponder (20, 21, 22, 23, 24) compares said at least one result R1 received with at least one result R1' generated from at least said at least one series of random numbers A1 received and at least one encryption function F1' recorded in at least one memory of said RFID transponder (20, 21, 22, 23, 24);
- After the step of comparing said at least one result R1 received with the at least one result R1' and if said at least one result R1' is equal to said at least one result R1 received, thus said at least one RFID transponder (20, 21, 22, 23, 24):
▪ swaps from a communication mode previously locked to an unlocked communication mode, making it possible for said at least one RFID transponder (20, 21, 22, 23, 24) to preferably transmit on request, at least said at least one identification number to the at least one RFID reader (10);
▪ sends (220) to said at least one RFID reader (10), at least one result R2', generated from at least said at least one series of random numbers A2 and at least one encryption function F2' recorded in at least one memory of said RFID transponder (20, 21, 22, 23, 24);
- After the step of comparing said at least one result R1 received with the at least one result R1' and if said at least one result R1' is different from said at least one result R1 received, thus said at least one RFID transponder (20, 21, 22, 23, 24) remains in said locked communication mode preventing said at least one RFID transponder (20, 21, 22, 23, 24) to transmit on request, at least said at least one identification number to the at least one RFID reader (10);
- After receipt by said at least one RFID reader (10) of the at least one series of random numbers A2 and of the at least one result R2', said at least one RFID reader (10):
▪ compares said at least one result R2' received with at least one result R2 generated from at least said at least one series of random numbers A2 received and at least one encryption function F2 recorded in at least one memory outside of the at least one RFID transponder (20, 21, 22, 23, 24);
▪ and if said at least one result R2' received is equal to the at least one result R2, thus said at least one RFID reader (10) sends (130) to said at least one RFID transponder (20, 21, 22, 23, 24) at least one request of said at least one identification number;
- Preferably, after receipt of said request of said at least one identification number sent by said at least one RFID reader (10), and if said at least one RFID transponder (20, 21, 22, 23, 24) is in said unlocked communication mode, thus preferably said at least one RFID transponder (20, 21, 22, 23, 24) sends (230) to said at least one RFID reader (10), at least said at least one identification number.

2. Method according to the preceding claim, wherein the calculation of the at least one result R2 is made before sending by said at least one RFID transponder (20, 21, 22, 23, 24) to said at least one RFID reader (10) of the at least one result R2'.

3. Method according to any one of the preceding claims, wherein the calculation of the at least one result R2 is made after sending by said at least one RFID transponder (20, 21, 22, 23, 24) to said at least one RFID reader (10) of the at least one result R2'.

4. Method according to any one of the preceding claims, wherein said at least one result R1 is generated from at least said at least one series of random numbers A1, of said at least one series of random numbers A2 and of said at least one encryption function F1, and wherein at least one result R1' is generated from at least said at least one series of random numbers A1, of said at least one series of random numbers A2 and of said at least one encryption function F1'.

5. Method according to any one of the preceding claims, wherein said at least one result R2' is generated from at least said at least one series of random numbers A1, of said at least one series of random numbers A2 and of said at least one encryption function F2, and wherein said at least one result R2 is generated from at least of said at least one series of random numbers A1, of said at least one series of random numbers A2 and of said at least one encryption function F2'.

6. Method according to any one of claims 1 to 3, wherein the sending (210) by said at least one RFID transponder (20, 21, 22, 23, 24) to said at least one RFID reader (10) of the at least one series of random numbers A2 is carried out after the sending (120) by said at least one RFID reader (10) to said at least one RFID transponder (20, 21, 22, 23, 24) of the at least one result R1.

7. Method according to any one of the preceding claims, wherein said at least one RFID reader (10) is in wired and/or non-wired communication with at least one database (12, 12a, 12b, 12c).

8. Method according to the preceding claim, wherein after receipt by said at least one RFID reader (10) of said at least one identification number sent by said at least one RFID transponder (20, 21, 22, 23, 24), said at least one RFID reader (10) sends to said at least one database (12, 12a, 12b, 12c) at least said at least one identification number of said at least one RFID transponder (20, 21, 22, 23, 24).

9. Method according to the preceding claim, wherein, in response to said sending to said at least one database (12, 12a, 12b, 12c) of said at least one identification number of said at least one RFID transponder (20, 21, 22, 23, 24), said at least one RFID reader (10) receives from said at least one database (12, 12a, 12b, 12c), data associated with said identification number of the at least one RFID transponder (20, 21, 22, 23, 24) after identification of said at least one RFID transponder (20, 21, 22, 23, 24) by said at least one database (12, 12a, 12b, 12c) from said at least one identification number.

10. Method according to any one of the preceding claims, wherein said at least one RFID reader (10) is in wired and/or non-wired communication with at least one encryption module (11), and wherein said at least one RFID reader (10) receives from said at least one encryption module (11), at least said at least one series of random numbers A1.

11. Method according to any one of the preceding claims, wherein said at least one RFID transponder (20, 21, 22, 23, 24) is associated with a manufactured product arranged in a commercial sale space or a storage warehouse.

12. Secure RFID inventory and authentication system configured to implement a secure communication method according to any one of the preceding claims comprising at least one RFID transponder (20, 21, 22, 23, 24) comprising at least one identification number and being associated with at least one manufactured product arranged in a commercial space, and at least one RFID reader (10), said system being **characterised in that** it is configured such that:
- Said at least one RFID reader (10) sends (110) to said at least one RFID transponder (20, 21, 22, 23, 24), at least one series of random numbers A1;
- Said at least one RFID transponder (20, 21, 22, 23, 24) sends (210) to said at least one RFID reader (10), at least one series of random numbers A2;
- Said at least one RFID reader (10) sends (120) to said at least one RFID transponder (20, 21, 22, 23, 24), at least one result R1, generated from at least said at least one series of random numbers A1, generated from at least said at least one series of random numbers A1 and at least one encryption function F1 recorded in at least one memory outside of the at least one RFID transponder (20, 21, 22, 23, 24);
- After receipt of the at least one series of random numbers A1 and of the at least one result R1 by said at least one RFID transponder (20, 21, 22, 23, 24), said at least one RFID transponder (20, 21, 22, 23, 24) compares said at least one result R1 received with at least one result R1' generated from at least said at least one series of random numbers A1 received and at least one encryption function F1' recorded in at least one memory of said RFID transponder (20, 21, 22, 23, 24);
- After the step of comparing said at least one result R1 received with the at least one result R1' and if said at least one result R1' is equal to said at least one result R1 received, thus said at least one RFID transponder (20, 21, 22, 23, 24):
▪ swaps from a communication mode previously locked to an unlocked communication mode, making it possible for said at least one RFID transponder (20, 21, 22, 23, 24) to preferably transmit on request, at least said at least one identification number to the at least one RFID reader (10);
▪ sends (220) to said at least one RFID reader (10), at least one result R2', generated from at least said at least one series of random numbers A2 and at least one encryption function F2' recorded in at least one memory of said RFID transponder (20, 21, 22, 23, 24);
- After the step of comparing said at least one result R1 received with the at least one result R1' and if said at least one result R1' is different from said at least one result R1 received, thus said at least one RFID transponder (20, 21, 22, 23, 24) remains in said locked communication mode preventing said at least one RFID transponder (20, 21, 22, 23, 24) to transmit on request, at least said at least one identification number to the at least one RFID reader (10);
- After receipt by said at least one RFID reader (10) of the at least one series of random numbers A2 and of the at least one result R2', said at least one RFID reader (10):
▪ compares said at least one result R2' received with at least one result R2 generated from at least said at least one series of random numbers A2 received and at least one encryption function F2 recorded in at least one memory outside of the at least one RFID transponder (20, 21, 22, 23, 24);
▪ if said at least one result R2' received is equal to the at least one result R2, thus said at least one RFID reader (10) sends (130) to said at least one RFID transponder (20, 21, 22, 23, 24) at least one request of said at least one identification number;
- Preferably, after receipt of said request of said at least one identification number sent by said at least one RFID reader (10), and if said at least one RFID transponder (20, 21, 22, 23, 24) is in said unlocked communication mode, thus preferably said at least one RFID transponder (20, 21, 22, 23, 24) sends (230) to said at least one RFID reader (10), at least said at least one identification number.

13. Computer program product saved in at least one non-transitional memory of at least one RFID transponder (20, 21, 22, 23, 24) comprising at least one identification number and configured to execute at least the following steps carried out by said at least one RFID transponder (20, 21, 22, 23, 24):
- Said at least one RFID transponder (20, 21, 22, 23, 24) sends (210) to said at least one RFID reader (10), at least one series of random numbers A2;
- After receipt of the at least one series of random numbers A1 and of the at least one result R1 by said at least one RFID transponder (20, 21, 22, 23, 24), said result R1 being sent by said at least one RFID reader (10) and being generated from at least said at least one series of random numbers A1 and of at least one encryption function F1, said at least one RFID transponder (20, 21, 22, 23, 24) compares said at least one result R1 received with at least one result R1' generated from at least said at least one series of random numbers A1 received and at least one encryption function F1' recorded in at least one memory of said RFID transponder (20, 21, 22, 23, 24);
- After the step of comparing said at least one result R1 received with the at least one result R1' and if said at least one result R1' is equal to said at least one result R1 received, thus said at least one RFID transponder (20, 21, 22, 23, 24):
▪ swaps from a communication mode previously locked to an unlocked communication mode, making it possible for said at least one RFID transponder (20, 21, 22, 23, 24) to preferably transmit on request, at least said at least one identification number to the at least one RFID reader (10);
▪ sends (220) to said at least one RFID reader (10), at least one result R2', generated from at least said at least one series of random numbers A2 and at least one encryption function F2' recorded in at least one memory of said RFID transponder (20, 21, 22, 23, 24);
- After the step of comparing said at least one result R1 received with the at least one result R1' and if said at least one result R1' is different from said at least one result R1 received, thus said at least one RFID transponder (20, 21, 22, 23, 24) remains in said locked communication mode preventing said at least one RFID transponder (20, 21, 22, 23, 24) to transmit on request, at least said at least one identification number to the at least one RFID reader (10);
- Preferably, after receipt of a request of said at least one identification number, and if said at least one RFID transponder (20, 21, 22, 23, 24) is in said unlocked communication mode, thus preferably said at least one RFID transponder (20, 21, 22, 23, 24) sends (230) to said at least one RFID reader (10), at least said at least one identification number.

14. RFID transponder (20, 21, 22, 23, 24) comprising at least one antenna, at least one microprocessor and at least one non-transitional memory inside which the computer program product is saved according to the preceding claim.

15. Computer program product saved in at least one non-transitional memory outside of at least one RFID transponder (20, 21, 22, 23, 24), and configured to execute at least the following steps carried out by at least one RFID reader (10):
- Said at least one RFID reader (10) sends (110) to said at least one RFID transponder (20, 21, 22, 23, 24), at least one series of random numbers A1;
- Said at least one RFID reader (10) sends (120) to said at least one RFID transponder (20, 21, 22, 23, 24), at least one result A1, generated from at least said at least one series of random numbers A1 and at least one encryption function F1 recorded in at least one memory outside of the at least one RFID transponder (20, 21, 22, 23, 24);
- After receipt of the at least one series of random numbers A2 and of the at least one result R2' by said at least one RFID reader (10), said result R2' being sent by said at least one RFID transponder (20, 21, 22, 23, 24) and being generated from at least said at least one series of random numbers A2 and at least one encryption function F2', said at least one RFID reader (10):
▪ compares said at least one result R2' received with at least one result R2 generated from at least said at least one series of random numbers A2 received and at least one encryption function F2 recorded in at least one memory outside of the at least one RFID transponder (20, 21, 22, 23, 24);
▪ if said at least one result R2' received is equal to the at least one result R2, thus said at least one RFID reader (10) sends (130) to said at least one RFID transponder (20, 21, 22, 23, 24) at least one request of said at least one identification number.
